(19) Europäisches Patentamt
European Patent Office
Office européen des brevets

(11) **EP 3 467 374 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **18187716.8**

(22) Anmeldetag: **07.08.2018**

(51) Int Cl.:
*F21S 41/25* *(2018.01)*   *F21S 41/255* *(2018.01)*
*F21S 41/26* *(2018.01)*   *F21S 41/143* *(2018.01)*
*F21S 41/147* *(2018.01)*  *F21S 41/20* *(2018.01)*
*F21S 41/663* *(2018.01)*  *F21S 41/265* *(2018.01)*

(54) **FAHRZEUGSCHEINWERFER**

VEHICLE HEADLAMP

PHARE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2017 AT 508502017**

(43) Veröffentlichungstag der Anmeldung:
**10.04.2019 Patentblatt 2019/15**

(73) Patentinhaber: **ZKW Group GmbH**
**3250 Wieselburg (AT)**

(72) Erfinder:
 • **Pürstinger, Josef**
 **4540 Bad Hall (AT)**
 • **Bauer, Friedrich**
 **3252 Bergland (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
**EP-A1- 2 553 319**     **EP-A1- 2 767 752**
**EP-A2- 2 910 847**     **EP-B1- 2 553 319**
**WO-A1-2018/172140**    **DE-A1-102004 019 857**
**DE-A1-102005 015 007** **DE-B4-102005 015 007**
**US-A1- 2017 241 607**

**Beschreibung**

Die Erfindung betrifft einen Fahrzeugscheinwerfer gemäß dem Oberbegriff von Anspruch 1.

Die Erfindung betrifft ferner einen Fahrzeugscheinwerfer gemäß dem Oberbegriff von Anspruch 6 und einen Fahrzeugscheinwerfer gemäß dem Oberbegriff von Anspruch 7.

Bei der Entwicklung der gegenwärtigen Scheinwerfersysteme steht immer mehr der Wunsch im Vordergrund, ein möglichst hochaufgelöstes, homogenes Lichtbild auf die Fahrbahn projizieren zu können. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell entspricht das Lichtbild im verwendeten Sinn einer Projektion auf eine vertikale Fläche entsprechend der einschlägigen Normen, die sich auf die KFZ-Beleuchtungstechnik beziehen.

Aus der EP 2 910 847 A2 ist ein Lichtmodul eines Scheinwerfers eines Kraftfahrzeugs bekannt. Das Lichtmodul umfasst mehrere matrixartig angeordnete, einzeln ansteuerbare Halbleiterlichtquellen zum Aussenden von Licht und mehrere den Halbleiterlichtquellen zugeordnete matrixartig angeordnete Primäroptiken zum Bündeln des von den Halbleiterlichtquellen ausgesandten Lichts.

Die EP 2 767 752 A1 offenbart eine Vorrichtung mit zwei Lichtleitern, welche jeweils eine Lichtquelle aufweisen und mit einer optischen Vorrichtung zur Erzeugung von Licht verbunden sind.

Bei Fahrzeugscheinwerfern nach dem Stand der Technik wird häufig ein Gesamtlichtbild, das vor das Fahrzeug projiziert wird, aus mehreren Teillichtbildern zusammengesetzt. Dabei werden die jeweiligen Teillichtbilder aus Lichtquellen und nachfolgenden Optikelementen erzeugt. Es sind häufig komplexe Anordnungen notwendig, um beispielsweise durch eine parallel gerichtete Abstrahlung der Lichtquellen zu bewirken, dass das Gesamtlichtbild durch die Teillichtbilder günstig zusammengesetzt werden kann. Dabei soll das Zusammensetzen der Teillichtbilder derart erfolgen, dass nach Möglichkeit keine Spalten zwischen benachbarten Teillichtbildern auftreten oder Überlappungen von benachbarten Teillichtbildern vermieden werden. Dadurch soll erreicht werden, dass ein möglichst hinsichtlich der Helligkeit homogenes Gesamtlichtbild gebildet wird. Alternativ kann hinsichtlich zu erreichender Intensitätswerte im Gesamtlichtbild ein Kriterium bei der Aneinanderreihung von Teillichtbildern sein. Zudem soll das Zusammensetzen von Teillichtbildern zu einem Gesamtlichtbild möglichst entfernungsunabhängig erfolgen, das heißt ein möglicher Parallaxen-Fehler soll korrigiert beziehungsweise minimiert werden. Es ist eine Aufgabe der vorliegenden Erfindung, einen Fahrzeugscheinwerfer der eingangs genannten Art zu schaffen, welcher ein günstiges Gesamtlichtbild, das aus mehreren Teillichtbildern zusammengesetzt ist, ermöglicht.

Die Aufgabe wird mit einem Fahrzeugscheinwerfer gemäß einer ersten Ausführungsform (Anspruch 1) gelöst, wobei erfindungsgemäß längs einer Kollimator-Gerade, welche normal zur Projektions-Achse verläuft und vorzugsweise diese schneidet, die zumindest zwei Kollimatoren angeordnet sind, und die Kollimator-Gerade vorzugsweise jeweils durch eine Hauptebene eines der zumindest zwei Kollimatoren verläuft, wobei längs einer Kollimator-Brennpunkt-Gerade, welche normal zur Projektions-Achse verläuft und vorzugsweise diese schneidet, die Kollimator-Brennpunkte gelegen sind, und die Kollimator-Bildfläche eine Ebene ist, und eine Kollimator-Bildflächen-Gerade, welche in der ebenen Kollimator-Bildfläche und normal zur Projektions-Achse verläuft und vorzugsweise diese schneidet, definiert ist, und der Brennpunkt der Projektionsoptik in der Kollimator-Bildfläche gelegen ist, wobei vorzugsweise zwischen der Kollimator-Bildflächen-Gerade und der Kollimator-Brennpunkt-Gerade in Richtung der Projektions-Achse ein erster Abstand definiert ist, welcher der Kollimator-Brennweite des Kollimators entspricht.

Die Aufgabe wird alternativ dazu mit einem Fahrzeugscheinwerfer gemäß einer zweiten Ausführungsform nach Anspruch 6 und mit einem Fahrzeugscheinwerfer gemäß einer dritten Ausführungsform nach Anspruch 7 gelöst.

Dabei sind die Leuchtmittel zwischen jeweils einem der zumindest zwei Kollimator-Brennpunkte und einem der zumindest zwei Kollimatoren gelegen, welche jeweils zumindest eine Sammellinse umfassen, wobei die zumindest zwei Kollimatoren, sofern sie jeweils aus mehreren Linsen bestehen, jeweils insgesamt als Sammellinse wirken sollen.

Dadurch wird erreicht, dass die Anordnung eingerichtet ist, mehrere aneinander angeordnete Teillichtbilder parallel abzustrahlen und dabei einen Parallaxen-Fehler, wie er im Stand der Technik häufig bei einer aneinandergrenzenden Anreihung von Teillichtbildern auftritt, zu reduzieren. Der Parallaxen-Fehler wird in unterschiedlichen Entfernungen vor dem Fahrzeug deutlich, indem beispielsweise eine überlappungsfreie, sowie lückenlose Darstellung der Teillichtbilder als Gesamtlichtbild entfernungsabhängig ist. Die Aufgabe wird alternativ dazu mit einem Fahrzeugscheinwerfer gemäß einer zweiten

Ausführungsform (Anspruch 6) gelöst, wobei erfindungsgemäß der Fahrzeugscheinwerfer eine Sammeloptik, welche zwischen der Projektionsoptik und den Kollimatoren angeordnet ist, mit einer optischen Achse und einem Sammeloptik-Brennpunkt umfasst ist, wobei die Projektions-Achse und die optische Achse der Sammeloptik parallel, vorzugsweise koaxial, verlaufen und ferner eine Sammeloptik-Bildfläche in Form einer Ebene definiert ist, welche normal zur optischen Achse und durch den Brennpunkt der Sammeloptik verläuft, und die Kollimator-Bildfläche zwischen der Sammeloptik-Bildfläche und den lichtemittierenden Flächen der zumindest zwei Leuchtmittel gelegen ist, und der Brennpunkt der Projektionsoptik in der Sammeloptik-Bildfläche gelegen ist, und eine Projektions-Brennpunkt-Gerade, welche durch den Brennpunkt der Projektionsoptik und normal zur Projektions-Achse verläuft und diese schneidet, definiert ist, und eine Kollimator-Bildflächen-Gerade, welche in der Kollimator-Bildfläche und normal zur Projektions-Achse verläuft und diese schneidet, definiert ist, die Distanz zwischen der Projektions-Brennpunkt-Gerade und der Kollimator-Bildfläche in Richtung der Projektions-Achse einen fünfter Abstand definiert, welcher vorzugsweise dem halben Wert der Brennweite des Sammeloptik-Brennpunkts entspricht.

Die Aufgabe wird alternativ mit einem Fahrzeugscheinwerfer gemäß einer dritten Ausführungsform (Anspruch 7) gelöst, wobei erfindungsgemäß die Projektionsoptik ferner eine Petzval-Fläche aufweist, und die zumindest zwei Kollimatoren zwischen der Petzval-Fläche der Projektionsoptik und der Projektionsoptik gelegen sind, und die Kollimator-Brennpunkte jeweils zwischen der Petzval-Fläche und den zumindest zwei Kollimatoren gelegen sind, und die zumindest zwei Leuchtmittel zwischen den zumindest zwei Kollimatoren und den Kollimator-Brennpunkten gelegen sind, und jedes der zumindest zwei Leuchtmittel eingerichtet ist, Licht von den jeweiligen lichtemittierenden Flächen ausgehend durch einen der zumindest zwei Kollimatoren hindurch zu emittieren und in Folge das emittierte Licht gemeinsam durch die Projektionsoptik geführt wird., wobei ferner eine Sammeloptik mit einer optischen Achse und einem Sammeloptik-Brennpunkt umfasst ist, wobei die Projektions-Achse und die optische Achse der Sammeloptik parallel, vorzugsweise koaxial, verlaufen und ferner eine Sammeloptik-Bildfläche definiert ist, welche durch den Brennpunkt der Sammeloptik verläuft, und die Kollimator-Bildfläche zwischen der Petzval-Fläche der Projektionsoptik und den lichtemittierenden Flächen der zumindest zwei Leuchtmittel gelegen ist, und der Brennpunkt der Projektionsoptik in der Sammeloptik-Bildfläche gelegen ist.

Die drei Ausführungsformen der Erfindung lösen die Aufgabe der Erfindung gleichermaßen.

Auch in der zweiten und dritten Ausführungsform sind die Leuchtmittel zwischen jeweils einem der zumindest zwei Kollimator-Brennpunkte und einem der zumindest zwei Kollimatoren gelegen, welche jeweils zumindest eine Sammellinse umfassen.

Dabei kann die Kollimator-Bildfläche eine räumlich gekrümmte Fläche sein, die durch den Aufbau und die geometrischen Abmessungen und Positionen der optischen Anordnung bestimmt ist.

Optische Linsen wie Sammellinsen weisen neben Brennpunkten sogenannte Petzval-Flächen auf, welche Brennflächen der optischen Linsen beschreiben und auf denen somit die Brennpunkte gelegen sind. Die Petzval-Flächen sind häufig räumlich gekrümmte Flächen.

Es ist bei der ersten oder zweiten Ausführungsformen günstig, wenn die Kollimator-Achsen und die Projektions-Achse parallel verlaufen. Dadurch kann die Anordnung besonders einfach konstruiert und hergestellt werden.

Um eine weitere Vereinfachung der Konstruktion des Scheinwerfers zu erreichen, ist es bei der ersten oder zweiten Ausführungsform günstig, wenn längs einer Leuchtmittel-Gerade, welche normal zur Projektions-Achse verläuft und vorzugsweise diese schneidet, die lichtemittierenden Flächen der zumindest zwei Leuchtmittel angeordnet sind, wobei die lichtemittierenden Flächen der zumindest zwei Leuchtmittel den zumindest zwei Kollimatoren zugewandt sind, und die Leuchtmittel-Gerade durch die lichtemittierende Flächen verläuft. Dadurch kann auch eine Herstellung erleichtert und kostengünstiger gestaltet werden.

Es ist bei der ersten Ausführungsform vorgesehen, dass längs einer Kollimator-Gerade, welche normal zur Projektions-Achse verläuft und vorzugsweise diese schneidet, die zumindest zwei Kollimatoren angeordnet sind, und die Kollimator-Gerade vorzugsweise jeweils durch eine Hauptebene eines der zumindest zwei Kollimatoren verläuft. Dadurch kann erreicht werden, dass die Anordnung besonders einfach konstruiert und hergestellt werden kann.

Es ist bei der ersten Ausführungsform vorgesehen, dass längs einer Kollimator-Brennpunkt-Gerade, welche normal zur Projektions-Achse verläuft und vorzugsweise diese schneidet, die Kollimator-Brennpunkte gelegen sind, und die Kollimator-Bildfläche eine Ebene ist, und eine Kollimator-Bildflächen-Gerade, welche in der ebenen Kollimator-Bildfläche und normal zur Projektions-Achse verläuft und vorzugsweise diese schneidet, definiert ist, und der Brennpunkt der Projektionsoptik in der Kollimator-Bildfläche gelegen ist.

Er ist bei der ersten Ausführungsform vorgesehen, dass zwischen der Kollimator-Bildflächen-Gerade und der Kollimator-Brennpunkt-Gerade in Richtung der Projektions-Achse ein erster Abstand definiert ist, welcher der Kollimator-Brennweite des Kollimators entspricht.

Die Erfindung gemäß der ersten oder zweiten Ausführungsform kann weitergebildet und vereinfacht werden, wenn die Distanz zwischen der Leuchtmittel-Gerade und der Kollimator-Brennpunkt-Gerade in Richtung der Projektions-Achse einen zweiten Abstand festlegt, welcher einem Drittel der Kollimator-Brennweite eines der zumindest zwei Kollimatoren entspricht.

Für eine Weiterbildung der Erfindung gemäß der ersten oder zweiten Ausführungsform ist es auch vorteilhaft, wenn die zumindest zwei Leuchtmittel jeweils eine Leucht-Breite normal zur Projektions-Achse aufweisen und untereinander jeweils einen Leuchten-Abstand normal zur Projektions-Achse aufweisen, welcher bevorzugt zwischen dem einfachen und dreifachen Wert der Leucht-Breite liegt, aber besonders bevorzugt dem doppelten Wert der Leucht-Breite entspricht. Die Leucht-Breite bezieht sich auf die Breite der lichtemittierenden Fläche der Leuchtmittel. Bei einer quadratischen lichtemittierenden Fläche des Leuchtmittels sind die Breite und Höhe, welche normal zur Breite gemessen wird, der lichtemittierenden Fläche gleich groß.

Erfindungsgemäß ist ferner ein Fahrzeugscheinwerfer gemäß einer zweiten Ausführungsform vorgesehen, welcher eine Sammeloptik mit einer optischen Achse und einem Sammeloptik-Brennpunkt umfasst, wobei die Projektions-Achse und die optische Achse der Sammeloptik parallel, vorzugsweise koaxial, verlaufen und ferner eine Sammeloptik-Bildfläche in Form einer Ebene definiert ist, welche normal zur optischen Achse und durch den Brennpunkt der Sammeloptik verläuft, und die Kollimator-Bildfläche zwischen der Sammeloptik-Bildfläche und den lichtemittierenden Flächen der zumindest zwei Leuchtmittel, aber bevorzugt zwischen der Sammeloptik-Bildfläche und den Kollimator-Brennpunkten gelegen ist, und der Brennpunkt der Projektionsoptik in der Sammeloptik-Bildfläche gelegen ist, und eine Projektions-Brennpunkt-Gerade, welche durch den Brennpunkt der Projektionsoptik und normal zur Projektions-Achse verläuft und diese schneidet, definiert ist, und eine Kollimator-Bildflächen-Gerade, welche in der Kollimator-Bildfläche und normal zur Projektions-Achse verläuft und diese schneidet, definiert ist, die Distanz zwischen der Projektions-Brennpunkt-Gerade und der Kollimator-Bildfläche in Richtung der Projektions-Achse einen fünfter Abstand definiert, welcher vorzugsweise dem halben Wert der Brennweite des Sammeloptik-Brennpunkts entspricht. Dadurch kann eine Konfiguration der Anordnung erreicht werden, bei welcher eine Überlappung von Teillichtbildern erzielt wird. Dies kann dazu genutzt werden, um beispielsweise eine Erhöhung der Intensität des Gesamtlichtbilds zu erreichen.

Der Fahrzeugscheinwerfer gemäß der dritten Ausführungsform kann weitergebildet sein, indem die Kollimator-Achsen jeweils normal zur Petzval-Fläche verlaufen.

Bei der dritten Ausführungsform ist es günstig, wenn dabei die zumindest zwei Leuchtmittel eingerichtet sind, durch die zumindest zwei Kollimatoren hindurch Licht zu emittieren und virtuelle Kollimator-Leuchtmittel-Bilder zu erzeugen, welche Objekte der Projektionsoptik bilden und als virtuelle Projektionsoptik-Leuchtmittel-Bilder auf der Petzval-Fläche erscheinen, welche über die Projektionsoptik abgebildet werden.

Zusätzlich ist es bei der dritten Ausführungsform günstig, wenn die virtuellen Projektionsoptik-Leuchtmittel-Bilder auf der Petzval-Fläche direkt aneinander angrenzen, oder sich die virtuellen Projektionsoptik-Leuchtmittel-Bilder auf der Petzval-Fläche überlappen, wobei die virtuellen Projektionsoptik-Leuchtmittel-Bilder jeweils eine virtuelle Breite aufweisen, und vorzugsweise zumindest eine Überlappung eine halbe virtuelle Breite beträgt.

Zusätzlich ist die dritte Ausführungsform der Erfindung weitergebildet, indem ferner eine Sammeloptik mit einer optischen Achse und einem Sammeloptik-Brennpunkt umfasst ist, wobei die Projektions-Achse und die optische Achse der Sammeloptik parallel, vorzugsweise koaxial, verlaufen und ferner eine Sammeloptik-Bildfläche definiert ist, welche durch den Brennpunkt der Sammeloptik verläuft, und die Kollimator-Bildfläche zwischen der Petzval-Fläche der Projektionsoptik und den lichtemittierenden Flächen der zumindest zwei Leuchtmittel, aber bevorzugt zwischen der Petzval-Fläche der Projektionsoptik und den Kollimator-Brennpunkten gelegen ist, und der Brennpunkt der Projektionsoptik in der Sammeloptik-Bildfläche gelegen ist,.

Für alle Ausführungsformen der Erfindung ist es günstig, wenn die lichtemittierenden Flächen der zumindest zwei Leuchtmittel jeweils normal zur Richtung der jeweilig zugeordneten Kollimator-Achsen angeordnet sind, wodurch eine einfache Konstruktion und Herstellung des Scheinwerfers ermöglicht wird.

Außerdem ist es für alle Ausführungsformen günstig, wenn das von den zumindest zwei Leuchtmitteln emittierte Licht in Richtung der Kollimator-Achse eines jeweils zugeordneten Kollimators durch diesen hindurch emittiert wird.

Außerdem ist es für alle Ausführungsformen günstig, wenn die zumindest zwei Leuchtmittel jeweils zumindest ein Halbleiter-Leuchtmittel, insbesondere eine Matrix von mehreren Halbleiter-Leuchtmitteln, welche vorzugsweise in Form eines elektronischen Bauteils gebildet ist, umfassen und vorzugsweise jeweils eine lichtemittierende Fläche mit quadratischer Form aufweisen, und vorzugsweise die zumindest zwei Leuchtmittel jeweils baugleich ausgeführt sind, um eine einfache Konstruktion des Scheinwerfers weiter zu verbessern und eine Herstellung zu erleichtern und kostengünstiger zu gestalten. Die lichtemittierenden Flächen können jeweils so gestaltet sein, dass mehrere, einzeln ansteuerbare Lichtquellen, beispielsweise in Form von Halbleiter-Lichtquellen wie LEDs oder Laser-Dioden, gemeinsam die lichtemittierende Fläche bilden. Bei einer quadratischen Form der lichtemittierenden Fläche entspricht die Leucht-Höhe der Leucht-Breite.

Zu einer weiteren Vereinfachung der Konstruktion des Scheinwerfers ist es für alle Ausführungsformen ebenso günstig, wenn die zumindest zwei Kollimatoren, welche vorzugsweise jeweils zumindest eine optische Sammellinse umfassen und vorzugsweise die zumindest zwei Kollimatoren jeweils baugleich ausgeführt sind. Dadurch kann eine Herstellung erleichtert und kostengünstiger gestaltet werden.

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in

Fig. 1    eine perspektivische Ansicht eines ersten Ausführungsbeispiels der Erfindung,

Fig. 2    eine perspektivische Ansicht eines zweiten Ausführungsbeispiels der Erfindung,

Fig. 3    eine Draufsicht einer Anordnung mit überlappenden Teillichtbildern,

Fig. 4    eine Draufsicht einer Anordnung mit angrenzenden Teillichtbildern gemäß der Erfindung,

Fig. 5    eine Draufsicht der Anordnung nach Fig. 1,

Fig. 6    eine weitere Draufsicht der Anordnung nach Fig. 1,

Fig. 7     eine Draufsicht der Anordnung nach Fig. 2,

Fig. 8     eine Draufsicht eines dritten Ausführungsbeispiels der Erfindung.

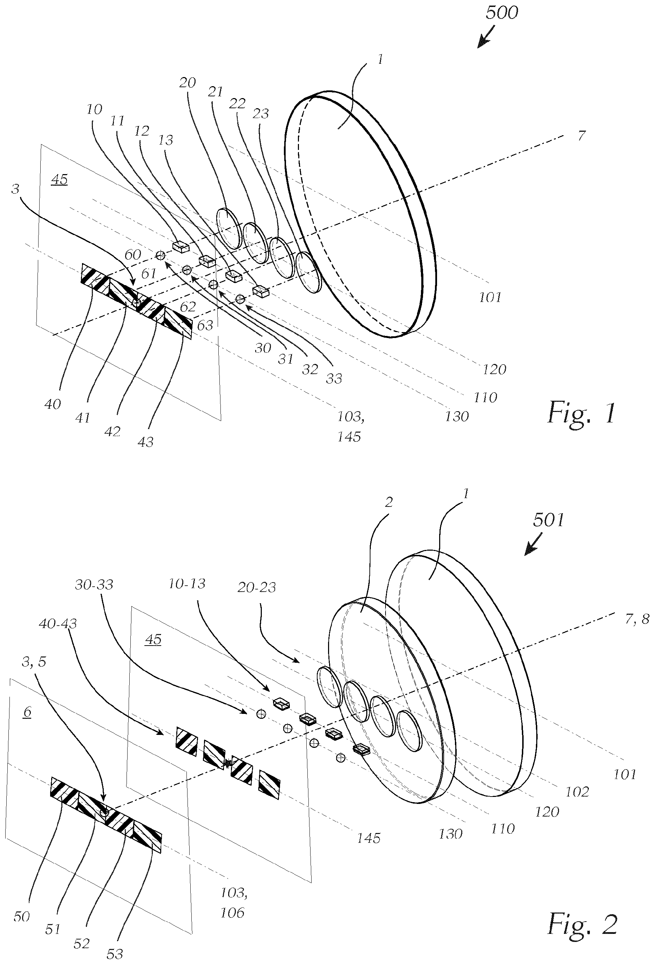

Unter Bezugnahme auf **Fig. 1** bis **Fig. 8** werden nun Ausführungsbeispiele der Erfindung näher erläutert. Insbesondere sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. Der Übersichtlichkeit halber sind daher beispielsweise Kühlvorrichtungen für Bauteile, Ansteuerungselektronik, weitere optische Elemente, mechanische Verstell-Einrichtungen beziehungsweise Halterungen nicht gezeigt.

Bei den weiteren Erläuterungen wird die Linsengleichung angewandt, welche bei einer optischen Abbildung mittels einer Linse die Beziehung zwischen einer Gegenstandsweite g, einer Bildweite b und einer Brennweite f angibt. Sie lautet:

$$\frac{1}{b} + \frac{1}{g} = \frac{1}{f}$$

Die Bezeichnungen gelten an einer Linse. Im Weiteren wird auf den Fall g<f Bezug genommen, in dem eine "Lupenwirkung" erzielt wird.

Durch Anwendung des Strahlensatzes der Geometrie auf einen Mittelpunktstrahl, welcher auch als Hauptpunktstrahl bezeichnet wird, also auf einen Strahl durch den optischen Mittelpunkt einer Linse, und die sich mit ihm im "Mittelpunkt der Linse" kreuzende optische Achse bei einer dünnen Linse, erhält man für den Abbildungsmaßstab M die Beziehung

$$M = \frac{B}{G} = \frac{b}{g}$$

wobei G die Größe des abzubildenden Gegenstandes (Objektes) und B die des Bildes ist. Die Gegenstandsweite oder Objektweite, also der Abstand zwischen einer objektseitigen sowie gegenstandseitigen Hauptebene der Linse und Objekt, ist hier mit g bezeichnet und die Bildweite, also der Abstand zwischen bildseitiger Hauptebene und Bild, mit b. Der Gegenstand G weist einen Fußpunkt auf der optischen Achse auf.

Die Hauptebenen einer Linse bezeichnen jene Ebenen quer zur optischen Achse des durch die Linse gehenden Lichts, von der aus die gegenstandseitige beziehungsweise bildseitige Brennweite der Linse angegeben wird.

Die Petzval-Fläche einer optischen Linse oder eines optischen Linsensystems ist durch die Abbildungseigenschaften, das heißt durch die Geometrie und die Materialeigenschaften der optischen Linse bestimmt, und mit Abbildungsfehlern für Randbereiche der optischen Linse verknüpft ist. Die Petzval-Fläche einer optischen Linse ist häufig eine gekrümmte Fläche, die den Brennpunkt der optischen Linse in der Bildmitte umfasst.

**Fig. 1, Fig. 5** und **Fig. 6** zeigen ein erstes Ausführungsbeispiel eines erfindungsgemäßen Fahrzeugscheinwerfers 500, der vier Leuchtmittel 10,11,12,13 mit jeweils einer lichtemittierenden Fläche 15, 16, 17, 18, sowie vier Kollimatoren 20, 21, 22, 23 mit jeweils einer optischen Kollimator-Achse 60, 61, 62, 63 und jeweils einem auf der Kollimator-Achse 60, 61, 62, 63 gelegenem Kollimator-Brennpunkt 30, 31, 32, 33, und eine Projektionsoptik 1 mit einer optischen Projektions-Achse 7 und einem auf der Projektions-Achse 7 gelegenen Brennpunkt 3, umfasst.

Die Kollimator-Achsen 60, 61, 62, 63 und die Projektions-Achse 7 verlaufen parallel.

Die vier Leuchtmittel 10,11,12,13 sind zwischen einer Kollimator-Bildfläche 45, welche normal zur Projektions-Achse 7 verläuft, und der Projektionsoptik 1 gelegen.

Die vier Kollimatoren 20, 21, 22, 23 sind jeweils zwischen den vier Leuchtmitteln 10, 11, 12, 13 und der Projektionsoptik 1 gelegen.

Die Kollimator-Brennpunkte 30, 31, 32, 33 sind jeweils zwischen der Kollimator-Bildfläche 45 und den vier Leuchtmitteln 10, 11, 12, 13 gelegen, wobei die vier Leuchtmitteln 10,11,12,13 jeweils innerhalb der Brennweite der vier zugeordneten Kollimatoren 20, 21, 22, 23 gelegen sind.

Jedes der vier Leuchtmittel 10,11,12,13 ist eingerichtet, Licht in Richtung der jeweiligen Kollimator-Achsen 60, 61, 62, 63 durch einen der vier Kollimatoren 20, 21, 22, 23 hindurch zu emittieren und in Folge wird das emittierte Licht gemeinsam durch die Projektionsoptik 1 geführt.

In diesem Zusammenhang wird davon ausgegangen, dass jeweils der überwiegende Teil jedes von den vier Leuchtmitteln 10,11,12,13 emittierten Lichts jeweils durch einen zugeordneten Kollimator 20, 21, 22, 23 geführt wird. Dabei erfolgt die Zuordnung von einem Leuchtmittel 10,11,12,13 und einem Kollimator 20, 21, 22, 23 durch die Anordnung in einer gemeinsamen optischen Achse, die der Kollimator-Achse 60, 61, 62, 63 entspricht und in die das Licht der lichtemittierenden Fläche 15, 16, 17, 18 eines Leuchtmittels 10, 11, 12, 13 überwiegend emittiert wird.

Die lichtemittierenden Flächen 15, 16, 17, 18 der vier Leuchtmittel 10, 11,12,13 sind in einer Ebene angeordnet, welche normal zur Richtung der Projektions-Achse 7 gelegen ist, und weisen jeweils eine Leucht-Breite 212 normal zur Projektions-Achse 7 und untereinander jeweils einen Leuchten-Abstand 216 normal zur Projektions-Achse 7 auf.

Längs einer Kollimator-Gerade 120, welche normal zur Projektions-Achse 7 verläuft und diese schneidet, sind die vier Kollimatoren 20, 21, 22, 23 angeordnet. Die Kollimator-Gerade 120 verläuft jeweils durch die objektseitigen Hauptpunkte der vier Kollimatoren 20, 21, 22, 23. Wenn es für eine Ausführungsform zweckdienlich ist, kann die Kollimator-Gerade 120 auch durch die bildseitige Hauptebene 122 des Kollimators 20, 21, 22, 23 verlaufen, insbesondere für die Bildweite 295 des Kollimators 20, 21, 22, 23. Dementsprechend kann die in den Figuren eingezeichnete Kollimator-Gerade 120 entsprechend definiert sein. Zur einfacheren Darstellung wird somit keine Differenzierung vorgenommen. Dem Fachmann ist jeweils klar, welcher Bezugspunkt für die jeweilige Betrachtung zu wählen ist.

Die vier Leuchtmittel 10,11,12,13 umfassen jeweils ein Halbleiter-Leuchtmittel, in Form flächenhafter, lichtemittierender Bereiche, die auch Matrix-artig unterteilt von mehreren einzelnen Halbleiter-Leuchtmitteln gebildet sein können. Die Matrix ist als Teil eines elektronischen Bauteils ausgebildet. Die vier Leuchtmittel 10,11,12,13 sind jeweils baugleich ausgeführt.

Die vier Kollimatoren 20, 21, 22, 23, welche vorzugsweise jeweils zumindest eine optische Linse oder ein mehrstufiges optisches Linsensystem mit in Summe positiver Brechkraft umfassen, weisen jeweils zumindest einen Brennpunkt auf. Die vier Kollimatoren 20, 21, 22, 23 sind jeweils baugleich ausgeführt sind.

Längs einer Leuchtmittel-Gerade 110, welche normal zur jeweiligen optischen Achse 60, 61, 62, 63 des Kollimators 20, 21, 22, 23 verläuft und diese schneidet, sind die lichtemittierenden Flächen 15, 16, 17, 18 der vier Leuchtmittel 10,11,12,13 angeordnet. Die lichtemittierenden Flächen 15, 16, 17, 18 der vier Leuchtmittel 10,11,12,13 sind den vier Kollimatoren 20, 21, 22, 23 zugewandt und die Leuchtmittel-Gerade 110 verläuft durch die lichtemittierende Flächen 15, 16, 17, 18.

Längs einer Kollimator-Brennpunkt-Gerade 130, welche normal zur Projektions-Achse 7 verläuft und diese schneidet, sind die Kollimator-Brennpunkte 30, 31, 32, 33 gelegen.

Es ist eine Kollimator-Bildflächen-Gerade 145 definiert, welche in der Kollimator-Bildfläche 45 und normal zur Projektions-Achse 7 verläuft und diese schneidet.

Es ist eine Projektions-Brennpunkt-Gerade 103 definiert, welche durch den Brennpunkt 3 der Projektionsoptik 1 und normal zur Projektions-Achse 7 verläuft und diese schneidet.

Die Projektions-Brennpunkt-Gerade 103 und die Kollimator-Bildflächen-Gerade 145 liegen in diesem Ausführungsbeispiel deckungsgleich, folglich ist der Brennpunkt 3 der Projektionsoptik 1 in der Kollimator-Bildfläche 45 gelegen.

In der Kollimator-Bildfläche 45 werden virtuelle Leuchtmittel 40, 41, 42, 43 als Bilder der lichtemittierenden Flächen 15, 16, 17, 18 gebildet, die durch die Projektionsoptik 1 in Form eines Gesamtlichtbilds vor das Fahrzeug abgebildet werden.

Zwischen der Kollimator-Bildflächen-Gerade 145 und der Kollimator-Brennpunkt-Gerade 130 in Richtung der Projektions-Achse 7 ist ein erster Abstand 235 definiert, welcher vorzugsweise der Kollimator-Brennweite 230, 231, 232, 233 des Kollimators 20, 21, 22, 23 entspricht.

Die Distanz zwischen der Leuchtmittel-Gerade 110 und der Kollimator-Brennpunkt-Gerade 130 in Richtung der Projektions-Achse 7 legt einen zweiten Abstand 236 fest, welcher vorzugsweise einem Drittel der Kollimator-Brennweite 230, 231, 232, 233 des Kollimators 20, 21, 22, 23 entspricht.

Ein dritter Abstand 237 ist durch die Differenz zwischen der Kollimator-Brennweite 230, 231, 232, 233 und dem zweiten Abstand 236 bestimmt und entspricht einer Gegenstandsweite in der Abbildungsgleichung für den Kollimator.

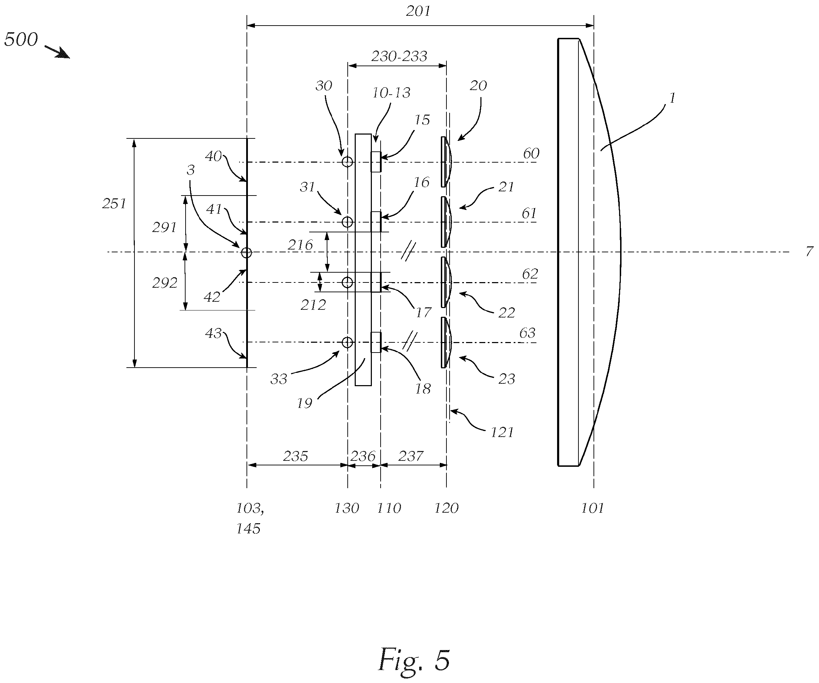

In Fig. 5 ist erkennbar, dass in der Kollimator-Bildflächen-Gerade 145, beziehungsweise in der Kollimator-Bildfläche 45 virtuelle Leuchtmittel 40, 41, 42, 43 abgebildet sind, welche überlappungsfrei und lückenlos mehrere Teillichtbilder zu einem Gesamtlichtbild 251 zusammengefügt sind beziehungsweise eine virtuelle Gegenstandsgröße der Projektionsoptik bilden. Die virtuellen Leuchtmittel 40, 41, 42, 43 weisen jeweils virtuelle, vorzugsweise gleiche Kollimator-Bildgrößen 291, 292 auf.

Eine Brennweite 201 der Projektionsoptik 1 wird von einer Hauptebene 101 der Projektionsoptik 1 aus gemessen, wie dem Fachmann bekannt.

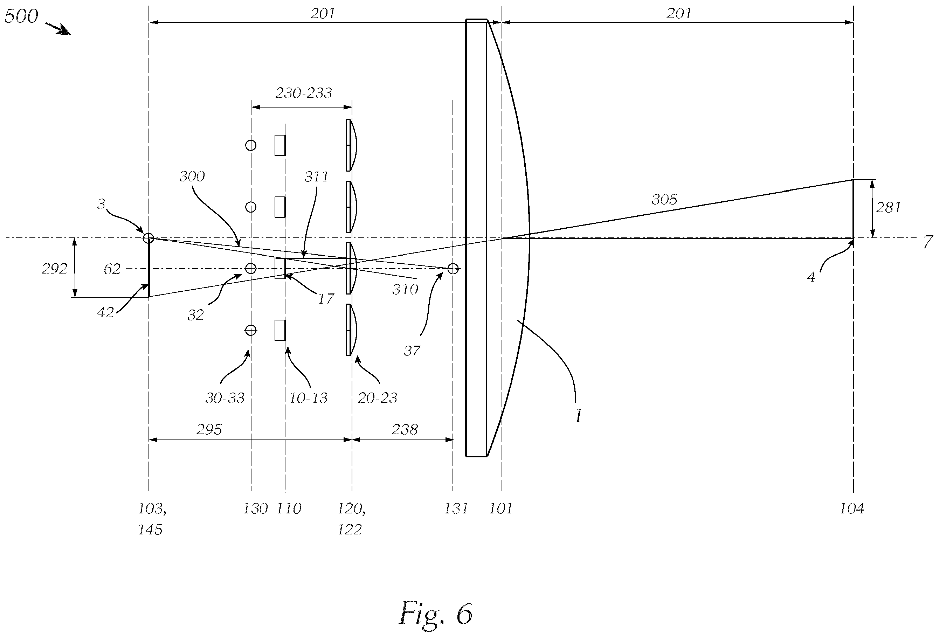

In Fig. 6 sind Konstruktionslinien für Lichtwege durch die Anordnung dargestellt, die zur Veranschaulichung des Funktionsprinzips dienen.

Grundsätzlich sollen die lichtemittierenden Flächen 15, 16, 17, 18 des Leuchtmittels 10, 11, 12, 13 innerhalb der Brennweite des Kollimators 20, 21, 22, 23 liegen. Eine Bildweite 295 des Kollimators 20, 21, 22, 23 kann mittels der oben angeführten Linsengleichung unter Berücksichtigung des Abbildungsmaßstabs und der Größen der lichtemittierenden Flächen 15, 16, 17, 18 bestimmt werden. Dabei sollen die Abstände, ausgehend jeweils von der objektseitigen Hauptebene, welche in der Kollimator-Gerade 120 gelegen ist, bestimmt werden. Die Bildweite soll von der bildseitigen Hauptebene 122 des Kollimators 20, 21, 22, 23, welche in dieser Ausführungsform im Apex einer plankonvexen Linse gelegen ist, bestimmt werden. Es ist ein vom Leuchtmittel 12 emittiertes Lichtbündel dargestellt, das in einer Grenzwertbetrachtung in Form eines Mittelpunktstrahls 310 durch den Mittelpunkt beziehungsweise Hauptpunkt des Kollimators 22 geleitet wird, als auch in Form eines Brennpunktstrahls 300 durch den bildseitigen Brennpunkt 37 des Kollimators 22 geleitet wird. Dieser Kollimator-Brennpunkt 37 ist längs einer Kollimator-Brennpunkt-Gerade 131, welche normal zur Projektions-Achse 7 verläuft und diese schneidet, gelegen. Die Konstruktionslinie bzw. der Parallelstrahl 311 begrenzt den abzubildenden Gegenstand und geht von der maximalen Größe des Gegenstands aus. Der Schnittpunkt des Mittelpunktstrahls 310 und des Brennpunktstrahls 300 liegt auf der Kollimator-Bildflächen-Gerade 145, und kennzeichnen den Rand der Abbildung und legen somit die Größe des virtuellen Bildes 292 der lichtemittierenden Fläche 17 fest.

Das Leuchtmittel 12 kann somit positioniert werden, indem der Rand der lichtemittierenden Fläche 17 des Leuchtmittels 12 im Schnittpunkt der Konstruktionslinie 311 und dem Mittelpunktstrahl 310 angeordnet ist. Dieses Positionsprinzip gilt analog für alle Leuchtmittel 10,11,12,13 und Kollimatoren 20, 21, 22, 23.

Es ist klar, dass die in den Figuren dargestellten Verläufe von Lichtstrahlen im Sinne von Konstruktionslinien zu sehen sind. Tatsächlich erfahren Lichtstrahlen, welche durch optische Linsen hindurch verlaufen, jeweils Brechungen an den Grenzen zwischen verschieden dichten optischen Materialien und reale Lichtstrahlen können daher entsprechend nicht gerade verlaufen.

Ein vierter Abstand 238 ist durch die Distanz auf der Projektions-Achse 7 beziehungsweise der Kollimator-Achse 62 zwischen der Kollimator-Gerade 122 und Kollimator-Brennpunkt-Gerade 131 definiert, der dem Wert der Brennweite der Kollimatoren und somit objektseitig dem Abstand der Kollimator-Brennpunkte 30, 31, 32, 33 von der Kollimator-Gerade 120 entspricht. In der Fig. 6 ist zur übersichtlicheren Darstellung nur eine Gerade für die Kollimator-Geraden 120 und 122 eingezeichnet.

Es ist eine Projektions-Bildebene 104 vor dem Fahrzeug definiert, welche durch den Brennpunkt 4 der Projektionsoptik 1 und normal zur Projektions-Achse 7 verläuft und diese schneidet, und in einer Einbaulage in einem Fahrzeug normal zur Fahrzeugachse des Fahrzeugs gelegen ist.

Ein Teillichtbild in Form des virtuellen Leuchtmittels 42 wird als Mittelpunktstrahl 305 durch den Hauptpunkt der Projektionsoptik 1 geleitet und bildet an der Position der Bildebene 104 eine Projektion mit der Bildgröße 281 aus. Der Mittelpunktstrahl 305 begrenzt den abzubildenden Gegenstand und geht von der maximalen Größe des Gegenstands aus.

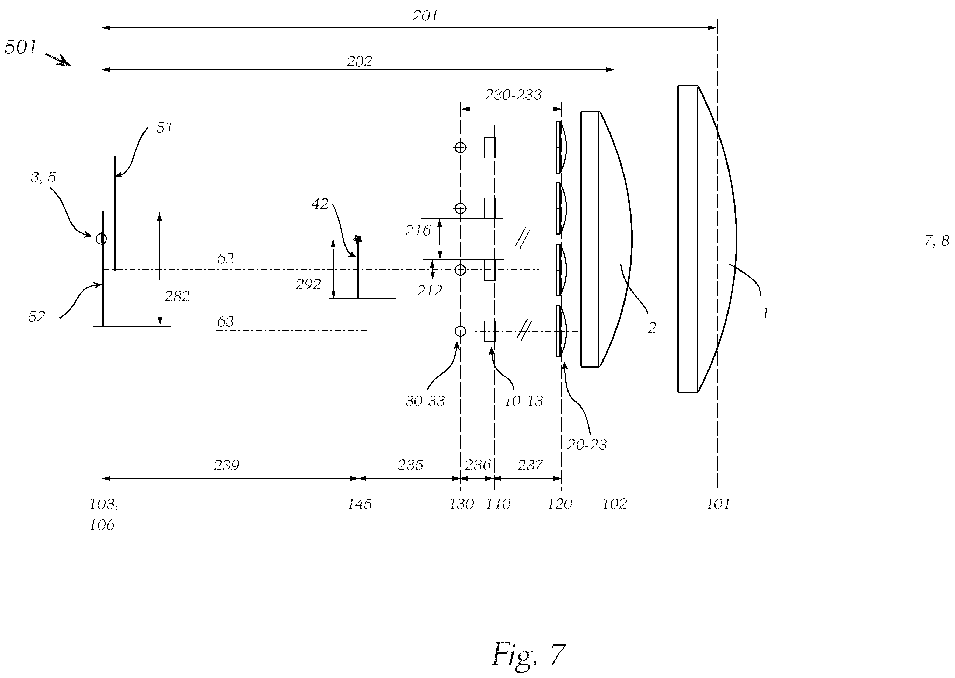

**Fig. 2** und **Fig. 7** zeigen ein zweites Ausführungsbeispiel eines erfindungsgemäßen Fahrzeugscheinwerfers 501, welches einer Erweiterung des Fahrzeugscheinwerfers 500 der Fig. 1 entspricht.

Es ist jedoch ferner eine Sammeloptik 2 mit einer optischen Achse 8 und einem Sammeloptik-Brennpunkt 5 umfasst, wobei die Projektions-Achse 7 und die optische Achse 8 der Sammeloptik 2 parallel, hier sogar koaxial, verlaufen.

Ferner ist eine Sammeloptik-Bildfläche 6 definiert, welche normal zur optischen Achse 8 und durch den Brennpunkt 5 der Sammeloptik 2 verläuft. Die Kollimator-Bildfläche 45 ist zwischen der Sammeloptik-Bildfläche 6 und den lichtemittierenden Flächen 15,16,17,18 der zumindest zwei Leuchtmittel 10,11,12,13, aber bevorzugt zwischen der Sammeloptik-Bildfläche 6 und den Kollimator-Brennpunkten 30, 31, 32, 33 gelegen. In der Sammeloptik-Bildfläche 6 ist eine Sammeloptik-Bildflächen-Gerade 106 definiert, welche normal zur Projektions-Achse 7 verläuft und diese schneidet.

Der Brennpunkt 3 der Projektionsoptik 1 ist in der Sammeloptik-Bildfläche 6 gelegen.

In der Sammeloptik-Bildfläche 6 werden virtuelle Leuchtmittel 50, 51, 52, 53 gebildet, die durch die Projektionsoptik 1 in Form eines Gesamtlichtbilds vor das Fahrzeug abgebildet werden.

Es ist eine Projektions-Brennpunkt-Gerade 103 definiert, welche durch den Brennpunkt 3 der Projektionsoptik 1 und normal zur Projektions-Achse 7 verläuft und diese schneidet.

Es ist eine Kollimator-Bildflächen-Gerade 145 definiert, welche in der Kollimator-Bildfläche 45 und normal zur Projektions-Achse 7 verläuft und diese schneidet.

Die Distanz zwischen der Projektions-Brennpunkt-Gerade 103 und der Kollimator-Bildfläche 45 beziehungsweise der Kollimator-Bildflächen-Gerade 145 in Richtung der Projektions-Achse 7 definiert einen fünften Abstand 239, welcher vorzugsweise dem halben Wert der Brennweite des Sammeloptik-Brennpunkt 5 entspricht, wie in Fig. 7 erkennbar.

Die lichtemittierenden Flächen 15, 16, 17, 18 der vier Leuchtmittel 10,11,12,13 weisen jeweils eine Leucht-Breite 212 normal zur Projektions-Achse 7 und untereinander jeweils einen Leuchten-Abstand 216 normal zur Projektions-Achse 7 auf, welcher in diesem Ausführungsbeispiel dem doppelten Wert der Leucht-Breite 212 entspricht. Es kann günstig sein, wenn die lichtemittierenden Flächen 15, 16, 17, 18 eine Leucht-Höhe aufweisen, welche der Leucht-Breite 212 entspricht und bedeutet, dass die lichtemittierenden Flächen 15,16,17, 18 jeweils quadratisch sind.

Der Leuchten-Abstand 216 ist grundsätzlich frei wählbar, wird jedoch durch die thermischen Emissionen der Leuchtmittel 10,11,12,13 beschränkt. In der Praxis bewährte Werte für den Leuchten-Abstand 216 liegen zwischen dem einfachen und dreifachen Wert der Leucht-Breite 212, vorzugsweise beim doppelten Wert der Leucht-Breite 212. Zu nahe beieinander angeordnete Leuchtmittel 10,11,12,13 können sich gegenseitig oder deren Module, welche eine Ansteuerungselektronik für die Leuchtmittel 10,11,12,13 umfassen, ungünstig beeinflussen. Eine möglicherweise notwendige Montage eines Kühlkörpers kann auch einen Einfluss auf den Leuchten-Abstand 216 haben.

Dem Fachmann ist es geläufig, alternativ optische Linsen mit anderer Brennweite zu wählen, wodurch sich klarerweise andere Abmessungen für die ersten bis fünften Abstände ergeben.

Für eine Weiterentwicklung der Erfindung kann bei Bedarf ein unterschiedlicher Überlappungsgrad der virtuellen Teillichtbilder erreicht werden.

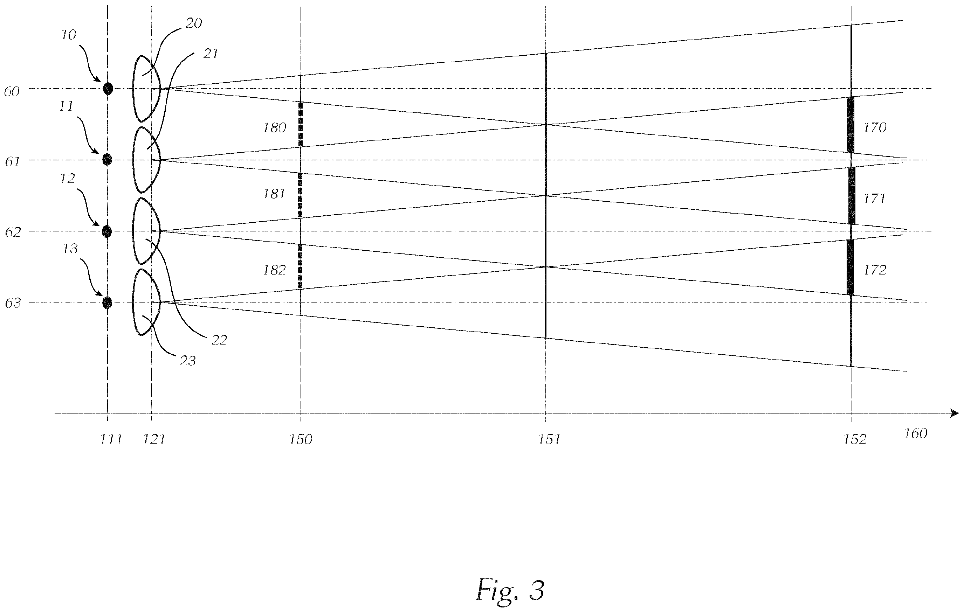

**Fig. 3** zeigt eine Anordnung von vier Leuchtmittel 10,11,12,13 in Form von Halbleiter-Lichtquellen mit vier jeweils zugeordneten Kollimatoren 20, 21, 22, 23 in Form von optischen Linsen, welche jeweils optische Kollimator-Achsen 60, 61, 62, 63 aufweisen, auf denen Kollimator-Brennpunkte 30, 31, 32, 33 gelegen sind. Die Leuchtmittel 10,11,12,13 emittieren jeweils Licht in Richtung der Kollimator-Achsen 60, 61, 62, 63 durch die jeweils zugeordneten Kollimatoren 20, 21, 22,23.

Die Kollimator-Achsen 60, 61, 62, 63 verlaufen parallel, sodass die Strahlengänge des von jedem Leuchtmittel 10, 11,12,13 emittierten Lichts auch parallel verlaufen.

Durch die Leuchtmittel 10,11,12,13 verläuft eine Leuchtmittel-Gerade 111, welche normal zu einer Lichtstrahl-Richtung 160 orientiert ist und diese schneidet.

Durch die Kollimatoren 20, 21, 22, 23 verläuft eine Kollimator-Gerade 121, welche normal zu einer Lichtstrahl-Richtung 160 orientiert ist und diese schneidet.

Es ist erkennbar, dass Teillichtbilder der einzelnen Leuchtmittel 10,11,12,13 derart projiziert werden, dass Überlappungsbereiche 170, 171, 172 oder Lücken 180, 181, 182 in der jeweiligen Abbildungsebene in unterschiedlichen Abständen, welche durch entsprechende Geraden 150, 151, 152 durch die Abbildungsebenen definiert sind, in einer Lichtstrahl-Richtung 160 entstehen. Folglich ist eine Aneinanderreihung von Teillichtbildern entfernungsabhängig, was als Parallaxen-Fehler bezeichnet wird. Der Parallaxen-Fehler soll durch die erfindungsgemäße Anordnung vermieden oder zumindest reduziert werden.

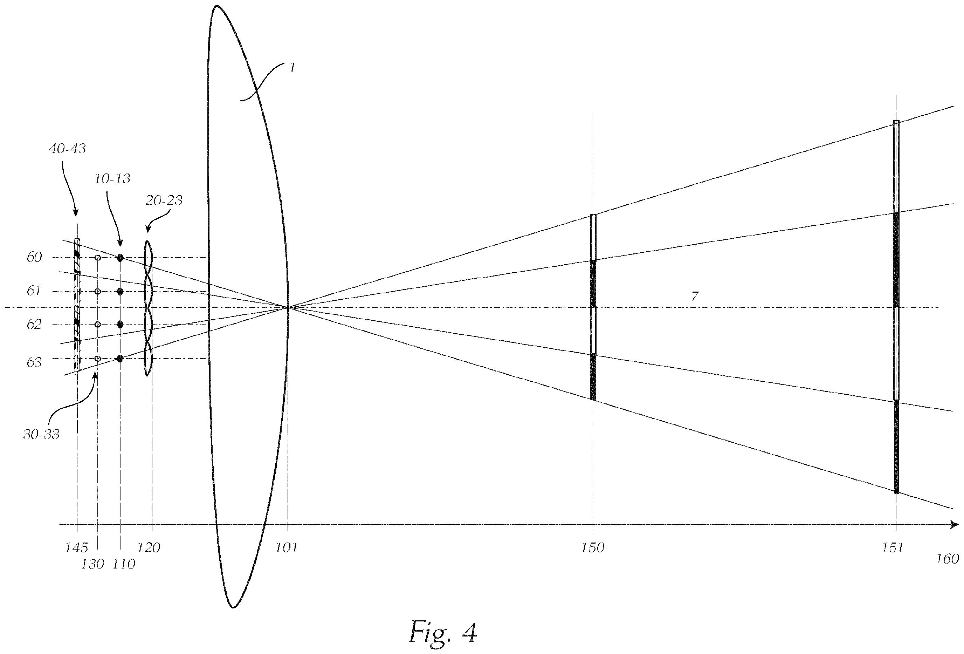

**Fig. 4** zeigt eine erfindungsgemäße Anordnung, welche so konfiguriert ist, dass eine Aneinanderreihung von Teillichtbildern entfernungsunabhängig ist und ein Parallaxen-Fehler vermieden wird.

Es sind vier Leuchtmittel 10,11,12,13 in Form von Halbleiter- Lichtquellen mit vier jeweils zugeordneten Kollimatoren 20, 21, 22,23 in Form von optischen Linsen mit einer jeweiligen Wirkung als Sammellinse, welche jeweils optische Kollimator-Achsen 60, 61, 62, 63 aufweisen, auf denen Kollimator-Brennpunkte 30, 31, 32, 33 gelegen sind, angeordnet. Die Leuchtmittel 10,11,12,13 emittieren jeweils Licht in Richtung der Kollimator-Achsen 60, 61, 62, 63 durch die jeweils zugeordneten Kollimatoren 20, 21, 22, 23.

Die Kollimator-Achsen 60, 61, 62, 63 verlaufen parallel, sodass die Strahlengänge des von jedem Leuchtmittel 10, 11,12,13 emittierten Lichts auch parallel verlaufen.

Zusätzlich ist eine Projektionsoptik 1 mit einer optischen Projektions-Achse, vorzugsweise eine optische Linse, vorgesehen, die den Kollimatoren 20, 21, 22, 23 im Strahlengang gemeinsam nachgelagert ist.

Die Kollimator-Achsen 60, 61, 62, 63 verlaufen parallel, sodass die Strahlengänge des von jedem Leuchtmittel 10, 11,12,13 emittierten Lichts auch parallel verlaufen.

Durch die Leuchtmittel 10,11,12,13 verläuft eine Leuchtmittel-Gerade 110, welche normal zu einer Lichtstrahl-Richtung 160 orientiert ist und diese schneidet.

Durch die Anordnung der Leuchtmittel 10, 11, 12, 13 längs der Leuchtmittel-Gerade 110 wird eine besonders einfache Konstruktion ermöglicht, da die Leuchtmittel 10,11,12,13 auf einem planaren Schaltungsträger in Form einer Leiterplatte (in der Fig. nicht eingezeichnet) angeordnet werden können. Die Leiterplatte kann gleichzeitig weitere Elektronikkomponenten, beispielsweise zur Ansteuerung der Leuchtmittel 10,11,12,13 oder Kühlkörper umfassen.

Durch die Kollimatoren 20, 21, 22, 23 verläuft eine Kollimator-Gerade 120, welche normal zu einer Lichtstrahl-Richtung 160, in die Projektions-Achse der Projektionsoptik 1 gelegen ist, orientiert ist und diese schneidet.

Durch die Anordnung der Kollimatoren 20, 21, 22, 23 längs der Kollimator-Gerade 120 wird eine besonders einfache Konstruktion ermöglicht, da die Kollimatoren 20, 21, 22, 23 in einer Ebene gelegen sind. Gleichzeitig kann jeweils eine Halterung für die optischen Linsen mit Befestigungspunkten zur Montage in einem Fahrzeugscheinwerfer berücksichtigt werden.

Es sind die Kollimator-Brennpunkte 30, 31, 32, 33 erkennbar, welche auf einer Kollimator-Brennpunkt-Gerade 130 gelegen sind, sodass virtuelle Leuchtmittel 40, 41, 42, 43 in einer Ebene zu liegen kommen, durch die eine Kollimator-Bildflächen-Gerade 145 verläuft.

Es ist außerdem erkennbar, dass Teillichtbilder der einzelnen Leuchtmittel 10,11,12,13 derart projiziert werden, dass keine Überlappungsbereiche oder Lücken in der jeweiligen Projektionsebene in unterschiedlichen Abständen 150, 151, 152 in der Lichtstrahl-Richtung 160 entstehen. Somit ist eine Aneinanderreihung von Teillichtbildern entfernungsabhängig.

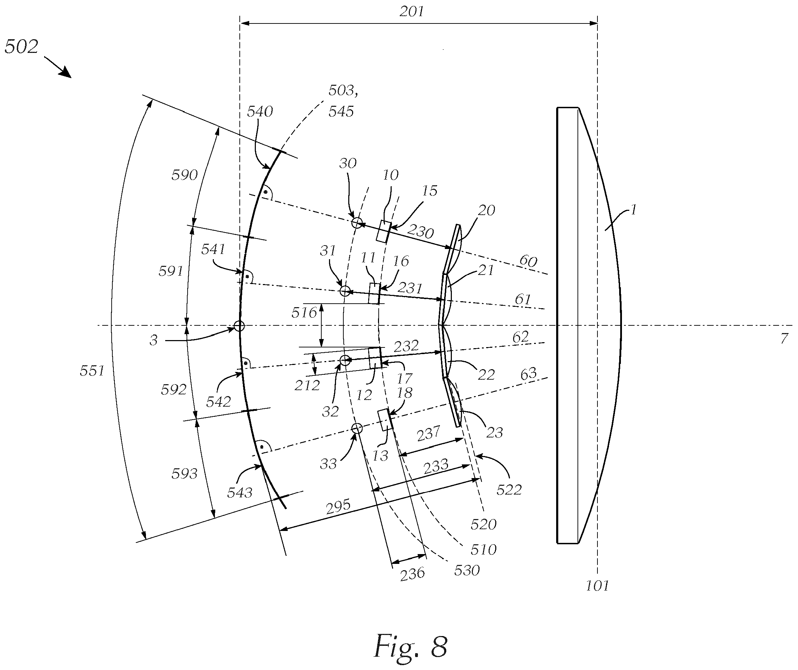

**Fig. 8** zeigt ein drittes Ausführungsbeispiel eines erfindungsgemäßen Fahrzeugscheinwerfers 502, welches auf einer modifizierten Anordnung des Fahrzeugscheinwerfers 500 der Fig. 1 basiert. Funktionell entspricht die Anordnung jener der vorhergehenden Ausführungsformen. Deshalb wird im Weiteren auf einige Bezugsgrößen nicht nochmals eingegangen und die Ausführungen weiter oben gelten sinngemäß.

Der Fahrzeugscheinwerfer 502 umfasst wiederum vier Leuchtmittel 10,11,12,13 mit jeweils einer lichtemittierenden Fläche 15, 16, 17, 18, sowie vier Kollimatoren 20, 21, 22, 23 mit jeweils einer optischen Kollimator-Achse 60, 61, 62, 63 und jeweils einem auf der Kollimator-Achse 60, 61, 62, 63 gelegenem Kollimator-Brennpunkt 30, 31, 32, 33, und eine Projektionsoptik 1 mit einer optischen Projektions-Achse 7 und einem auf der Projektions-Achse 7 gelegenen Brennpunkt 3, sowie einer räumlich gewölbten Petzval-Fläche 503, in der auch der Brennpunkt 3 gelegen ist.

Die Kollimator-Achsen 60, 61, 62, 63 sind jeweils in einem rechten Winkel zur Petzval-Fläche 503 angeordnet. Somit schließen die Kollimator-Achsen 60, 61, 62, 63 und die Projektions-Achse 7 jeweils einen Winkel ein.

Die vier Leuchtmittel 10,11,12,13 sind zwischen einer gewölbten Kollimator-Bildfläche 545, welche in der gewölbten Petzval-Fläche 503 gelegen ist und im Schnittpunkt mit der Projektions-Achse 7 normal zur Projektions-Achse 7 verläuft, und der Projektionsoptik 1 gelegen.

Die vier Kollimatoren 20, 21, 22, 23 sind jeweils zwischen der Petzval-Fläche 503 der Projektionsoptik 1, und der Projektionsoptik 1 gelegen. Bevorzugt liegen die vier Kollimatoren 20, 21, 22, 23 entlang einer Kollimator-Kurve 520, welche die optischen Achsen 60, 61, 62, 63 der vier Kollimatoren 20, 21, 22, 23 jeweils im rechten Winkel schneidet. Die Kollimatoren weisen eine gemeinsame bildseitige Hauptfläche 522 der Kollimatoren 20, 21, 22, 23, ähnlich zur in den vorhergehenden Ausführungsformen genannten Hauptebene, auf.

Die Kollimator-Brennpunkte 30, 31, 32, 33 sind jeweils zwischen der Petzval-Fläche 503 und den vier Kollimatoren 20, 21, 22, 23 gelegen sind. Bevorzugt liegen die Kollimator-Brennpunkte 30, 31, 32, 33 entlang einer Kollimator-Brennpunkt-Kurve 530, welche die optischen Achsen 60, 61, 62, 63 der vier Kollimatoren 20, 21, 22, 23 jeweils im rechten Winkel schneidet.

Die vier Leuchtmittel 10,11,12,13 sind jeweils zwischen den vier Kollimatoren 20, 21, 22, 23 und den Kollimator-Brennpunkten 30, 31, 32, 33 gelegen.

Jedes der vier Leuchtmittel 10,11,12,13 ist eingerichtet, Licht von den jeweiligen lichtemittierenden Flächen 15, 16, 17, 18 ausgehend durch einen der vier Kollimatoren 20, 21, 22, 23 hindurch zu emittieren und in Folge das emittierte Licht gemeinsam durch die Projektionsoptik 1 zu führen. Die lichtemittierenden Flächen 15,16,17,18 weisen eine Leucht-Breite 212 auf. Bevorzugt liegen die vier Leuchtmittel 10,11,12,13 entlang einer Leuchtmittel-Kurve 510, welche die optischen Achsen 60, 61, 62, 63 der vier Kollimatoren 20, 21, 22, 23 jeweils im rechten Winkel schneidet. Entlang der Leuchtmittel-Kurve 510 weisen die vier Leuchtmittel 10,11,12,13 jeweils einen Leuchtmittel-Abstand 516 auf.

Die Kollimator-Achsen 60, 61, 62, 63 verlaufen jeweils normal zur Petzval-Fläche 503.

Die vier Leuchtmittel sind eingerichtet, durch die zumindest zwei Kollimatoren hindurch Licht zu emittieren und virtuelle Kollimator-Leuchtmittel-Bilder zu erzeugen, welche Objekte der Projektionsoptik 1 bilden und als virtuelle Projektionsoptik-Leuchtmittel-Bilder 540, 541, 542, 543 auf der Petzval-Fläche 503 erscheinen, welche jeweils eine Bildgröße 590, 591, 592, 593 aufweisen und über die Projektionsoptik 1 abgebildet werden.

Die aneinandergereihten Leuchtmittel-Bilder 540, 541, 542, 543 weisen insgesamt eine Bildgröße 551 auf.

Die virtuellen Projektionsoptik-Leuchtmittel-Bilder 540, 541, 542, 543 auf der Petzval-Fläche 503 direkt aneinander angrenzen. In diesem Fall kann eine überlappungsfreie Darstellung von Teillichtbildern der vier Leuchtmittel erreicht werden.

Alternativ können sich die virtuellen Projektionsoptik-Leuchtmittel-Bilder 540, 541, 542, 543 auf der Petzval-Fläche 503 überlappen, wobei die virtuellen Projektionsoptik-Leuchtmittel-Bilder 540, 541, 542, 543 jeweils eine virtuelle Breite aufweisen, und vorzugsweise zumindest eine Überlappung eine halbe virtuelle Breite beträgt. Dadurch kann die Intensität des Gesamtlichtbildes, welches sich durch Überlagerung mit Überlappung von Teillichtbildern der vier Leuchtmittel erreicht wird, erhöht werden.

Analog zur Ausführungsform nach der Fig. 2 kann die Ausführungsform der Fig. 8 auch um eine zusätzliche Sammeloptik ergänzt werden. Diese Variante ist nicht gesondert dargestellt.

In diesem Zusammenhang wird davon ausgegangen, dass jeweils der überwiegende Teil jedes des von den vier Leuchtmitteln 10, 11, 12, 13 emittierten Lichts jeweils durch einen zugeordneten Kollimator 20, 21, 22, 23 geführt wird. Dabei erfolgt die Zuordnung von einem Leuchtmittel 10,11,12,13 und einem Kollimator 20, 21, 22, 23 durch die Anordnung in einer gemeinsamen optischen Achse, die der Kollimator-Achse 60, 61, 62, 63 entspricht und in die das Licht der lichtemittierenden Fläche 15, 16, 17, 18 eines Leuchtmittels 10, 11, 12, 13 überwiegend emittiert wird.

Im Übrigen gelten die Ausführungen der Fig. 1 bis 7.

Es ist klar, dass die Ausführungsformen untereinander auch kombinierbar sind. Das bedeutet, dass eine erfindungsgemäße Anordnung von optischen Elementen auch eine Kombination von Konstruktionen, welche jeweils von einem Brennpunkt ausgehen, und Konstruktionen, welche jeweils von einer Brennfläche ausgehen, beinhalten kann.

Bezugszeichenliste:

| | |
|---|---|
| 1 | Projektionsoptik |
| 2 | Sammeloptik |
| 3 | objektseitiger Brennpunkt der Projektionsoptik |

| | |
|---|---|
| 4 | bildseitiger Brennpunkt der Projektionsoptik |
| 5 | objektseitiger Brennpunkt der Sammeloptik |
| 6 | Bildebene der Sammeloptik |
| 7 | optische Achse der Projektionsoptik |
| 8 | optische Achse der Sammeloptik |
| 10, 11, 12, 13 | Leuchtmittel |
| 15, 16, 17, 18 | Lichtemittierende Fläche der Leuchtmittel |
| 19 | Leuchtmittel-Träger |
| 20, 21, 22, 23 | Kollimator |
| 30, 31, 32, 33 | objektseitiger Brennpunkt des Kollimators |
| 37 | bildseitiger Brennpunkt des Kollimators |
| 40,41,42,43, 50, 51, 52, 53 540, 541, 542, 543 | virtuelle Leuchtmittel-Bilder |
| 45 | Bildebene der Kollimatoren |
| 60, 61, 62, 63 | optische Achse des Kollimators |
| 101 | Projektionsoptik-Gerade bzw. objektseitige Hauptebene der Projektionsoptik |
| 102 | Sammeloptik-Gerade bzw. objektseitige Hauptebene der Sammeloptik |
| 103 | Projektionsoptik-Brennpunkt-Gerade bzw. Brennlinie |
| 104 | Bildebene vor dem Fahrzeug |
| 106 | Sammeloptik-Bildflächen-Gerade |
| 110, 111 | Leuchtmittel-Gerade |
| 120, 121 | Kollimator-Gerade bzw. objektseitige Hauptebene des Kollimators |
| 122 | bildseitige Hauptebene des Kollimators |
| 130 | Kollimator-Brennpunkt-Gerade |
| 131 | bildseitige Kollimator-Brennpunkt-Gerade |
| 145 | Kollimator-Bildfläche-Gerade |
| 150,151,152 | Gerade durch Abbildungsebene |
| 160 | Lichtstrahl-Richtung |
| 170,171,172 | Überlappungsbereiche |
| 180,181,182 | Lücken |
| 201 | Brennweite der Projektionsoptik |
| 202 | Brennweite der Sammeloptik |
| 212 | Leucht-Breite des Leuchtmittels, Gegenstandsgröße des Kollimators |
| 230,231, 232, 233 | Brennweite des Kollimators |
| 216,516 | Leuchten-Abstand zwischen Leuchtfeldern der Leuchtmittel |
| 235 | erster Abstand |
| 236 | zweiter Abstand |
| 237 | dritter Abstand |
| 238 | vierter Abstand |
| 239 | fünfter Abstand |
| 251, 551 | Gegenstandsgröße G der Projektionsoptik |
| 281 | Bildgröße B der Projektionsoptik |
| 282 | Bildgröße B der Sammeloptik |
| 291, 292, 590,591, 592, 593 | Bildgröße B des Kollimators |
| 295 | Bildweite b des Kollimators |
| 300, 305 | Lichtstrahl bzw. Konstruktionslinie durch Mittelpunkt der Optik |
| 310 | Lichtstrahl bzw. Konstruktionslinie durch Brennpunkt der Optik |
| 311 | Lichtstrahl bzw. Konstruktionslinie parallel zur optischen Achse des Kollimators |
| 500, 501, 502 | Fahrzeugscheinwerfer |
| 503 | Petzval-Fläche oder Brennpunkt-Fläche der Projektionsoptik |
| 510 | Leuchtmittel-Kurve |
| 520 | Kollimator-Kurve bzw. objektseitige Hauptfläche des Kollimators |
| 522 | bildseitige Hauptfläche des Kollimators |
| 530 | Kollimator-Brennpunkt-Kurve |
| 545 | Kollimator-Bildfläche |

**Patentansprüche**

1. Fahrzeugscheinwerfer (500, 501), umfassend zumindest zwei Leuchtmittel (10, 11, 12, 13) mit jeweils einer lichtemittierenden Fläche (15, 16, 17, 18), zumindest zwei Kollimatoren (20, 21, 22, 23) mit jeweils einer optischen Kollimator-Achse (60, 61, 62, 63) und jeweils einem auf der Kollimator-Achse (60, 61, 62, 63) gelegenem Kollimator-Brennpunkt (30, 31, 32, 33), und eine Projektionsoptik (1) mit einer optischen Projektions-Achse (7) und einem auf der Projektions-Achse (7) gelegenen Brennpunkt (3), wobei

   die zumindest zwei Kollimatoren (20, 21, 22, 23) zwischen einer Kollimator-Bildfläche (45), welche normal zur Projektions-Achse (7) verläuft, und der Projektionsoptik (1) gelegen sind, und die Kollimator-Brennpunkte (30, 31, 32, 33) jeweils zwischen der Kollimator-Bildfläche (45) und den zumindest zwei Kollimatoren (20, 21, 22, 23) gelegen sind, und die zumindest zwei Leuchtmittel (10, 11, 12, 13) zwischen den zumindest zwei Kollimatoren (20, 21, 22, 23) und den Kollimator-Brennpunkten (30, 31, 32, 33) gelegen sind, und jedes der zumindest zwei Leuchtmittel (10, 11, 12, 13) eingerichtet ist, Licht von den jeweiligen lichtemittierenden Flächen (15, 16, 17, 18) ausgehend durch einen der zumindest zwei Kollimatoren (20, 21, 22, 23) hindurch zu emittieren und in Folge das emittierte Licht gemeinsam durch die Projektionsoptik (1) geführt wird, **dadurch gekennzeichnet, dass** längs einer Kollimator-Gerade (120), welche normal zur Projektions-Achse (7) verläuft und vorzugsweise diese schneidet, die zumindest zwei Kollimatoren (20, 21, 22, 23) angeordnet sind, und die Kollimator-Gerade (120) vorzugsweise jeweils durch eine Hauptebene eines der zumindest zwei Kollimatoren (20, 21, 22, 23) verläuft, wobei längs einer Kollimator-Brennpunkt-Gerade (130), welche normal zur Projektions-Achse (7) verläuft und vorzugsweise diese schneidet, die Kollimator-Brennpunkte (30, 31, 32, 33) gelegen sind, und die Kollimator-Bildfläche (45) eine Ebene ist, und eine Kollimator-Bildflächen-Gerade (145), welche in der ebenen Kollimator-Bildfläche (45) und normal zur Projektions-Achse (7) verläuft und vorzugsweise diese schneidet, definiert ist, und der Brennpunkt (3) der Projektionsoptik (1) in der Kollimator-Bildfläche (45) gelegen ist, wobei vorzugsweise zwischen der Kollimator-Bildflächen-Gerade (145) und der Kollimator-Brennpunkt-Gerade (130) in Richtung der Projektions-Achse (7) ein erster Abstand (235) definiert ist, welcher der Kollimator-Brennweite (230, 231, 232, 233) des Kollimators (20, 21, 22, 23) entspricht.

2. Fahrzeugscheinwerfer (500, 501) nach Anspruch 1, **dadurch gekennzeichnet, dass** die Kollimator-Achsen (60, 61, 62, 63) und die Projektions-Achse (7) parallel verlaufen.

3. Fahrzeugscheinwerfer (500, 501) nach einem der vorhergehenden Ansprüche, **dadurch gekennzeichnet, dass** längs einer Leuchtmittel-Gerade (110), welche normal zur Projektions-Achse (7) verläuft und vorzugsweise diese schneidet, die lichtemittierenden Flächen (15, 16, 17, 18) der zumindest zwei Leuchtmittel (10, 11, 12, 13) angeordnet sind, wobei die lichtemittierenden Flächen (15, 16, 17, 18) der zumindest zwei Leuchtmittel (10, 11, 12, 13) den zumindest zwei Kollimatoren (20, 21, 22, 23) zugewandt sind, und die Leuchtmittel-Gerade (110) durch die lichtemittierende Flächen (15, 16, 17, 18) verläuft.

4. Fahrzeugscheinwerfer (500, 501) nach Anspruch 3, **dadurch gekennzeichnet, dass** die Distanz zwischen der Leuchtmittel-Gerade (110) und der Kollimator-Brennpunkt-Gerade (130) in Richtung der Projektions-Achse (7) einen zweiten Abstand (236) festlegt, welcher einem Drittel der Kollimator-Brennweite (230, 231, 232, 233) eines der zumindest zwei Kollimatoren (20, 21, 22, 23) entspricht.

5. Fahrzeugscheinwerfer (500, 501) nach einem der vorhergehenden Ansprüche, **dadurch gekennzeichnet, dass** die zumindest zwei Leuchtmittel (10, 11, 12, 13) jeweils eine Leucht-Breite (212) normal zur Projektions-Achse (7) aufweisen und untereinander jeweils einen Leuchten-Abstand (216) normal zur Projektions-Achse (7) aufweisen, welcher bevorzugt zwischen dem einfachen und dreifachen Wert der Leucht-Breite (212) liegt, aber besonders bevorzugt dem doppelten Wert der Leucht-Breite (212) entspricht.

6. Fahrzeugscheinwerfer (500, 501), umfassend zumindest zwei Leuchtmittel (10, 11, 12, 13) mit jeweils einer lichtemittierenden Fläche (15, 16, 17, 18), zumindest zwei Kollimatoren (20, 21, 22, 23) mit jeweils einer optischen Kollimator-Achse (60, 61, 62, 63) und jeweils einem auf der Kollimator-Achse (60, 61, 62, 63) gelegenem Kollimator-Brennpunkt (30, 31, 32, 33), und eine Projektionsoptik (1) mit einer optischen Projektions-Achse (7) und einem auf der Projektions-Achse (7) gelegenen Brennpunkt (3), wobei die zumindest zwei Kollimatoren (20, 21, 22, 23) zwischen einer Kollimator-Bildfläche (45), welche normal zur Projektions-Achse (7) verläuft, und der Projektionsoptik (1) gelegen sind, und die Kollimator-Brennpunkte (30, 31, 32, 33) jeweils zwischen der Kollimator-Bildfläche (45) und den zumindest zwei Kollimatoren (20, 21, 22, 23) gelegen sind, und die zumindest zwei Leuchtmittel (10, 11, 12, 13) zwischen den zumindest zwei Kollimatoren (20, 21, 22, 23) und den Kollimator-Brennpunkten (30, 31, 32, 33) gelegen sind, und jedes der zumindest zwei Leuchtmittel (10, 11, 12, 13) eingerichtet ist, Licht von den jeweiligen lichtemittierenden Flächen (15, 16, 17, 18) ausgehend durch einen der zumindest zwei Kollimatoren (20, 21, 22, 23) hindurch zu emittieren und in Folge das emittierte Licht gemeinsam durch die Projektionsoptik (1) geführt wird, **dadurch gekennzeichnet, dass** der Fahrzeugscheinwerfer (500, 501) eine Sammeloptik (2), welche zwischen der Projektionsoptik (1) und den Kollimatoren (20, 21, 22, 23) angeordnet ist, mit einer optischen Achse (8) und einem Sammeloptik-Brennpunkt (5) umfasst, wobei die Projektions-Achse (7) und die optische Achse (8) der Sammeloptik (2) parallel, vorzugsweise koaxial, verlaufen und ferner eine Sammeloptik-Bildfläche (6) in Form einer Ebene definiert ist, welche normal zur optischen Achse (8) und durch den Brennpunkt (5) der Sammeloptik (2) verläuft, und die Kollimator-Bildfläche (45) zwischen der Sammeloptik-Bildfläche (6) und den lichtemittierenden Flächen (15, 16, 17, 18) der zumindest zwei Leuchtmittel (10, 11, 12, 13) gelegen ist, und der Brennpunkt (3) der Projektionsoptik (1) in der Sammeloptik-Bildfläche (6) gelegen ist, und eine Projektions-Brennpunkt-Gerade (103), welche durch den Brennpunkt (3) der Projektionsoptik (1) und normal zur Projektions-Achse (7) verläuft und diese schneidet, definiert ist, und eine Kollimator-Bildflächen-Gerade (145), welche in der Kollimator-Bildfläche (45) und normal zur Projektions-Achse (7) verläuft und diese schneidet, definiert ist, die Distanz zwischen der Projektions-Brennpunkt-Gerade (103) und der Kollimator-Bildfläche (45) in Richtung der Projektions-Achse (7) einen fünfter Abstand (239) definiert, welcher vorzugsweise dem halben Wert der Brennweite des Sammeloptik-Brennpunkts (5) entspricht.

7. Fahrzeugscheinwerfer (500, 501, 502), umfassend zumindest zwei Leuchtmittel (10, 11, 12, 13) mit jeweils einer lichtemittierenden Fläche (15, 16, 17, 18), zumindest zwei Kollimatoren (20, 21, 22, 23) mit jeweils einer optischen Kollimator-Achse (60, 61, 62, 63) und jeweils einem auf der Kollimator-Achse (60, 61, 62, 63) gelegenem Kollimator-Brennpunkt (30, 31, 32, 33), und eine Projektionsoptik (1) mit einer optischen Projektions-Achse (7) und einem auf der Projektions-Achse (7) gelegenen Brennpunkt (3),
**dadurch gekennzeichnet, dass**

die Projektionsoptik (1) ferner eine Petzval-Fläche (503) aufweist, und
die zumindest zwei Kollimatoren (20, 21, 22, 23) zwischen der Petzval-Fläche (503) der Projektionsoptik (1) und der Projektionsoptik (1) gelegen sind, und
die Kollimator-Brennpunkte (30, 31, 32, 33) jeweils zwischen der Petzval-Fläche (503) und den zumindest zwei Kollimatoren (20, 21, 22, 23) gelegen sind, und
die zumindest zwei Leuchtmittel (10, 11, 12, 13) zwischen den zumindest zwei Kollimatoren (20, 21, 22, 23) und den Kollimator-Brennpunkten (30, 31, 32, 33) gelegen sind,
und jedes der zumindest zwei Leuchtmittel (10, 11, 12, 13) eingerichtet ist, Licht von den jeweiligen lichtemittierenden Flächen (15, 16, 17, 18) ausgehend durch einen der zumindest zwei Kollimatoren (20, 21, 22, 23) hindurch zu emittieren und in Folge das emittierte Licht gemeinsam durch die Projektionsoptik (1) geführt wird, wobei ferner eine Sammeloptik (2) mit einer optischen Achse (8) und einem Sammeloptik-Brennpunkt (5) umfasst ist, wobei die Projektions-Achse (7) und die optische Achse (8) der Sammeloptik (2) parallel, vorzugsweise koaxial, verlaufen und ferner eine Sammeloptik-Bildfläche (6) definiert ist, welche durch den Brennpunkt (5) der Sammeloptik (2) verläuft, und die Kollimator-Bildfläche (545) zwischen der Petzval-Fläche (503) der Projektionsoptik (1) und den lichtemittierenden Flächen (15, 16, 17, 18) der zumindest zwei Leuchtmittel (10, 11, 12, 13) gelegen ist, und der Brennpunkt (3) der Projektionsoptik (1) in der Sammeloptik-Bildfläche (6) gelegen ist.

8. Fahrzeugscheinwerfer (502) nach Anspruch 7, **dadurch gekennzeichnet, dass** die Kollimator-Achsen (60, 61, 62, 63) jeweils normal zur Petzval-Fläche (503) verlaufen.

9. Fahrzeugscheinwerfer (502) nach Anspruch 7 oder 8, **dadurch gekennzeichnet, dass** die zumindest zwei Leuchtmittel eingerichtet sind, durch die zumindest zwei Kollimatoren hindurch Licht zu Emittieren und virtuelle Kollimator-Leuchtmittel-Bilder zu erzeugen, welche Objekte der Projektionsoptik (1) bilden und als virtuelle Projektionsoptik-Leuchtmittel-Bilder (540, 541, 542, 543) auf der Petzval-Fläche (503) erscheinen, welche über die Projektionsoptik (1) abgebildet werden, wobei die virtuellen Projektionsoptik-Leuchtmittel-Bilder (540, 541, 542, 543) auf der Petzval-Fläche (503) direkt aneinander angrenzen.

10. Fahrzeugscheinwerfer (502) nach Anspruch 7 oder 8, **dadurch gekennzeichnet, dass** die zumindest zwei Leuchtmittel eingerichtet sind, durch die zumindest zwei Kollimatoren hindurch Licht zu Emittieren und virtuelle Kollimator-Leuchtmittel-Bilder zu erzeugen, welche Objekte der Projektionsoptik (1) bilden und als virtuelle Projektionsoptik-Leuchtmittel-Bilder (540, 541, 542, 543) auf der Petzval-Fläche (503) erscheinen, welche über die Projektionsoptik (1) abgebildet werden, wobei sich die virtuellen Projektionsoptik-Leuchtmittel-Bilder (540, 541, 542, 543) auf der Petzval-Fläche (503) überlappen, wobei die virtuellen Projektionsoptik-Leuchtmittel-Bilder (540, 541, 542, 543) jeweils eine Leucht-Breite (516) aufweisen, und zumindest eine Überlappung eine halbe Leucht-Breite (516) beträgt.

11. Fahrzeugscheinwerfer (500, 501, 502) nach einem der vorhergehenden Ansprüche, **dadurch gekennzeichnet, dass** die lichtemittierenden Flächen (15, 16, 17, 18) der zumindest zwei Leuchtmittel (10, 11, 12, 13) jeweils normal zur Richtung der jeweilig zugeordneten Kollimator-Achsen (60, 61, 62, 63) angeordnet sind, wobei vorzugsweise das von den zumindest zwei Leuchtmitteln (10, 11, 12, 13) emittierte Licht in Richtung der Kollimator-Achse (60, 61, 62, 63) eines jeweils zugeordneten Kollimators durch diesen hindurch emittiert wird.

12. Fahrzeugscheinwerfer (500, 501, 502) nach einem der vorhergehenden Ansprüche, **dadurch gekennzeichnet, dass** die zumindest zwei Leuchtmittel (10, 11, 12, 13) jeweils zumindest ein Halbleiter-Leuchtmittel, insbesondere eine Matrix von mehreren Halbleiter-Leuchtmitteln, welche vorzugsweise in Form eines elektronischen Bauteils gebildet ist, umfassen und vorzugsweise jeweils eine lichtemittierende Fläche (15, 16, 17, 18) mit quadratischer Form aufweisen und vorzugsweise die zumindest zwei Leuchtmittel (10, 11, 12, 13) jeweils baugleich ausgeführt sind.

13. Fahrzeugscheinwerfer (500, 501, 502) nach einem der vorhergehenden Ansprüche, **dadurch gekennzeichnet, dass** die zumindest zwei Kollimatoren (20, 21, 22, 23), welche vorzugsweise jeweils zumindest eine optische Sammellinse umfassen, jeweils baugleich ausgeführt sind.

**Claims**

1. Vehicle headlamp (500, 501), comprising at least two illuminating means (10, 11, 12, 13) each having a light-emitting surface (15, 16, 17, 18), at least two collimators (20, 21, 22, 23) each having a collimator optical axis (60, 61, 62, 63) and in each case a collimator focal point (30, 31, 32, 33) located on the collimator axis (60, 61, 62, 63), and a projection optics (1) with an optical projection axis (7) and a focal point (3) located on the projection axis (7), wherein

    the at least two collimators (20, 21, 22, 23) are located between a collimator image surface (45), which is normal to the projection axis (7), and the projection optics (1), and
    the collimator focal points (30, 31, 32, 33) are each located between the collimator image surface (45) and the at least two collimators (20, 21, 22, 23), and said at least two illuminating means (10, 11, 12, 13) are located between said at least two collimators (20, 21, 22, 23), respectively, and collimators (20, 21, 22, 23) and the collimator focal points (30, 31, 32, 33), and each of the at least two light-emitting means (10, 11, 12, 13) is arranged to emit light from the respective light-emitting surfaces (15, 16, 17, 18) through one of the at least two collimators (20, 21, 22, 23), and subsequently the emitted light is jointly guided through the projection optics (1), **characterized in that** the at least two collimators (20, 21, 22, 23) are arranged along a collimator straight line (120) which runs normal to the projection axis (7) and preferably intersects it, and the collimator straight line (120) preferably runs through a main plane of each of the at least two collimators (20, 21, 22, 23), 21, 22, 23), the collimator focal points (30, 31, 32, 33) being located along a collimator focal point straight line (130) which runs normal to the projection axis (7) and preferably intersects it, and the collimator image area (45) being a plane, and a collimator image area straight line (145), which is located in the plane collimator focal point straight line (130), preferably intersects it, being located in the plane collimator image area (45), which extends in the plane collimator image surface (45) and normal to the projection axis (7) and preferably intersects it, and the focal point (3) of the projection optics (1) is located in the collimator image surface (45), wherein preferably between the collimator image surface straight line (145) and the collimator focal point straight line (130) in the direction of the projection axis (7) the collimator image surface straight line (145) and the collimator focal point straight line (130) in the direction of the projection axis (7) a first distance (235) is defined, which corresponds to the collimator focal length (230, 231, 232, 233) of the collimator (20, 21, 22, 23).

2. Vehicle headlamp (500, 501) according to claim 1, **characterized in that** the collimator axes (60, 61, 62, 63) and the projection axis (7) are parallel.

3. Vehicle headlamp (500, 501) according to one of the preceding claims, **characterized in that** along an illuminant straight line (110), which runs normal to the projection axis (7) and preferably intersects it, the light-emitting surfaces (15, 16, 17, 18) of the at least two light-emitting means (10, 11, 12, 13) are arranged, the light-emitting surfaces (15, 16, 17, 18) of the at least two light-emitting means (10, 11, 12, 13) facing the at least two collimators (20, 21, 22, 23), and the light-emitting means straight line (110) running through the light-emitting surfaces (15, 16, 17, 18).

4. Vehicle headlamp (500, 501) according to claim 3, **characterized in that** the distance between the illuminant straight line (110) and the collimator focal point straight line (130) in the direction of the projection axis (7) defines a second distance (236) which corresponds to one third of the collimator focal length (230, 231, 232, 233) of one of the at least two collimators (20, 21, 22, 23).

5. Vehicle headlamp (500, 501) according to one of the preceding claims, **characterized in that** the at least two luminous means (10, 11, 12, 13) each have a luminous width (212) normal to the projection axis (7) and each have between them a luminaire spacing (216) normal to the projection axis (7) which preferably lies between one and three times the value of the luminous width (212), but particularly preferably corresponds to twice the value of the luminous width (212).

6. Vehicle headlamp (500, 501), comprising at least two illuminating means (10, 11, 12, 13) each having a light-emitting surface (15, 16, 17, 18), at least two collimators (20, 21, 22, 23) each having an optical collimator axis (60, 61, 62, 63) and a collimator focal point (30, 31, 32, 33), and a projection optics (1) having a projection optical axis (7) and a focal point (3) located on the projection axis (7), wherein the at least two collimators (20, 21, 22, 23) are located between a collimator image surface (45), which is normal to the projection axis (7), and the projection optics (1) and the collimator focal points (30, 31, 32, 33) are respectively located between the collimator image surface (45) and the at least two collimators (20, 21, 22, 23), and the at least two illuminating means (10, 11, 12, 13) are located between the at least two collimators (20, 21, 22, 23) and the collimator focal points (30, 31, 32, 33), and each of the at least two illuminating means (10, 11, 12, 13) is arranged to emit light from the respective light-emitting surfaces (15, 16, 17, 18) through one of the at least two collimators (20, 21, 22, 23) and subsequently the emitted light is jointly guided through the projection optics (1), **characterized in that** the vehicle headlamp (500, 501) comprises a collecting optics (2), which is arranged between the projection optics (1) and the collimators (20, 21, 22, 23), with an optical axis (8) and a collecting optics focal point (5), wherein the projection axis (7) and the optical axis (8) of the collecting optics (2) run parallel, preferably coaxially, and further a collection optics image area (6) is defined in the form of a plane which extends normal to the optical axis (8) and through the focal point (5) of the collection optics (2), and the collimator image area (45) is located between the collection optics image area (6) and the light emitting areas (15, 16, 17, 18) of the at least two light emitting means (10, 11, 12, 13) and the focal point (3) of the projection optics (1) is located in the collecting optics image area (6), and a projection focal point straight line (103), which passes through the focal point (3) of the projection optics (1) and normal to the projection axis (7) and intersects it, is defined, and a collimator image area straight line (145), which extends in and intersects the collimator image surface (45) and normal to the projection axis (7) is defined, the distance between the projection focal point straight line (103) and the collimator image surface (45) in the direction of the projection axis (7) defines a fifth distance (239) which preferably corresponds to half the value of the focal length of the collection optics focal point (5).

7. Vehicle headlamp (500, 501, 502), comprising at least two illuminating means (10, 11, 12, 13) each having a light-emitting surface (15, 16, 17, 18), at least two collimators (20, 21, 22, 23) each having an optical collimator axis (60, 61, 62, 63) and in each case a collimator focal point (30, 31, 32, 33) located on the collimator axis (60, 61, 62, 63), and a projection optical system (1) with an optical projection axis (7) and a focal point (3) located on the projection axis (7),
   **characterized in that**

   the projection optics (1) further comprise a Petzval surface (503), and
   the at least two collimators (20, 21, 22, 23) are located between the Petzval surface (503) of the projection optics (1) and the projection optics (1), and
   the collimator focal points (30, 31, 32, 33) are each located between the Petzval surface (503) and the at least two collimators (20, 21, 22, 23), and
   said at least two illuminating means (10, 11, 12, 13) are located between said at least two collimators (20, 21, 22, 23) and said collimator focal points (30, 31, 32, 33), respectively
   and each of the at least two illuminating means (10, 11, 12, 13) is arranged to emit light from the respective light-emitting surfaces (15, 16, 17, 18) through one of the at least two collimators (20, 21, 22, 23) and subsequently the emitted light is jointly guided through the projection optics (1), further comprising a collection optics (2) with an optical axis (8) and a collection optics focal point (5), wherein the projection axis (7) and the optical axis (8) of the collection optics (2) are parallel, preferably coaxial, and further a collecting optics image area (6) is defined which passes through the focal point (5) of the collecting optics (2), and the collimator image area (545) is defined between the Petzval area (503) of the projection optics (1) and the light emitting areas (15, 16, 17, 18) of the at least two illuminating means (10, 11, 12, 13), and the focal point (3) of the projection optics (1) is located in the collecting optics image area (6).

8. Vehicle headlamp (502) according to claim 7, **characterized in that** the collimator axes (60, 61, 62, 63) each extend normal to the Petzval surface (503).

9. Vehicle headlamp (502) according to claim 7 or 8, **characterized in that** the at least two illuminants are arranged to emit light through the at least two collimators and to generate virtual collimator-luminant images, which form objects of the projection optics (1) and appear as virtual projection optics illuminant images (540, 541, 542, 543) on the Petzval surface (503), which are imaged via the projection optics (1), the virtual projection optics illuminant images (540, 541, 542, 543) being directly adjacent to one another on the Petzval surface (503).

10. Vehicle headlamp (502) according to claim 7 or 8, **characterized in that** the at least two illuminants are arranged to emit light through the at least two collimators and to through the at least two collimators and to generate virtual collimator-luminous means images which form objects of the projection optics (1) and appear as virtual projection optics-luminous means images (540, 541, 542, 543) on the Petzval surface (503) which are imaged via the projection optics (1), wherein the virtual projection optics illuminant images (540, 541, 542, 543) overlap on the Petzval surface (503), wherein the virtual projection optics illuminant images (540, 541, 542, 543) each have an illuminant width (516), and at least one overlap is half an illuminant width (516).

11. Vehicle headlamp (500, 501, 502) according to one of the preceding claims, **characterized in that** the light-emitting surfaces (15, 16, 17, 18) of the at least two luminous means (10, 11, 12, 13) are each arranged perpendicular to the direction of the respectively associated collimator axes (60, 61, 62, 63), wherein preferably the light emitted by the at least two illuminating means (10, 11, 12, 13) is emitted in the direction of the collimator axis (60, 61, 62, 63) of a respectively associated collimator through the latter.

12. Vehicle headlamp (500, 501, 502) according to one of the preceding claims, **characterized in that** the at least two light-emitting means (10, 11, 12, 13) each comprise at least one semiconductor light-emitting means, in particular a matrix of a plurality of semiconductor light-emitting means, which is preferably formed in the form of an electronic component, and preferably each have a light-emitting surface (15, 16, 17, 18) of square shape, and preferably the at least two light-emitting means (10, 11, 12, 13) are each of identical design.

13. Vehicle headlamp (500, 501, 502) according to one of the preceding claims, **characterized in that** the at least two collimators (20, 21, 22, 23), which preferably each comprise at least one optical converging lens, are each of identical construction.

## Revendications

1. 1. Projecteur de véhicule (500, 501), comprenant au moins deux moyens d'éclairage (10, 11, 12, 13) présentant chacun une surface d'émission de lumière (15, 16, 17, 18), au moins deux des collimateurs (20, 21, 22, 23) ayant chacun un axe optique de collimateur (60, 61, 62, 63) et un point focal de collimateur (30, 31, 32, 33) situé sur l'axe de collimateur (60, 61, 62, 63), et un système optique de projection (1) ayant un axe optique de projection (7) et un point focal (3) situé sur l'axe de projection (7),
où

les au moins deux collimateurs (20, 21, 22, 23) sont situés entre une surface d'image de collimateur (45) normale à l'axe de projection (7) et l'optique de projection (1), et
les points focaux de collimateur (30, 31, 32, 33) sont chacun situés entre la surface d'image de collimateur (45) et les au moins deux collimateurs (30, 31, 32, 33).
et les au moins deux collimateurs (20, 21, 22, 23), et les au moins deux moyens lumineux (10, 11, 12, 13) sont situés entre les au moins deux collimateurs (20, 21, 22, 23) et les points focaux de collimateur (30, 31, 32, 33), et chacun des au moins deux moyens lumineux (10, 11, 12, 13) est configuré pour émettre de la lumière depuis les surfaces émettrices de lumière respectives (15, 16, 17, 18) à travers l'un des au moins deux collimateurs (20, 21, 22, 23) et pour émettre de la lumière depuis les au moins deux moyens lumineux (10, 11, 12, 13) à travers les au moins deux collimateurs (20, 21, 22, 23), 23) et la lumière émise est ensuite guidée ensemble à travers l'optique de projection (1), **caractérisé en ce que** les au moins deux collimateurs (20, 21, 22, 23) sont disposés le long d'une droite de collimateur (120) perpendiculaire à l'axe de projection (7) et coupant de préférence celui-ci, et la droite de collimateur (120) passe de préférence chaque fois par un plan principal de l'un des au moins deux collimateurs (20, 21, 22, 23), 21, 22, 23), les foyers de collimateur (30, 31, 32, 33) étant situés le long d'une droite de foyer de collimateur (130) qui s'étend perpendiculairement à l'axe de projection (7) et le coupe de préférence, et la surface d'image de collimateur (45) étant un plan, et une droite de surface d'image de collimateur (145) qui s'étend dans le plan de la surface d'image de collimateur (45) et perpendiculairement à l'axe de projection (7) et le coupe de préférence, et le point focal (3) de l'optique de projection (1) est situé dans la surface d'image du collimateur (45), dans lequel de préférence entre la ligne droite de la surface d'image du collimateur (145) et la ligne droite du point focal du collimateur (130) dans la direction de l'axe de projection (7), une première distance (235) est définie qui correspond à la distance focale du collimateur (230, 231, 232, 233) du collimateur (20, 21, 22, 23).

2. Projecteur de véhicule (500, 501) selon la revendication 1, **caractérisé en ce que** les axes du collimateur (60, 61, 62, 63) et l'axe de projection (7) sont parallèles.

3. Projecteur de véhicule (500, 501) selon l'une des revendications précédentes, **caractérisé en ce que** les surfaces d'émission de lumière (15, 16, 17, 18) des au moins deux moyens d'émission de lumière (10, 11, 12, 13) sont disposées le long d'une droite de moyens d'émission de lumière (110) qui s'étend perpendiculairement à l'axe de projection (7) et coupe de préférence ce dernier, 11, 12, 13) sont disposés, les surfaces d'émission de lumière (15, 16, 17, 18) des au moins deux moyens d'émission de lumière (10, 11, 12, 13) faisant face aux au moins deux collimateurs (20, 21, 22, 23), et la ligne droite d'émission de lumière (110) passant par les surfaces d'émission de lumière (15, 16, 17, 18).

4. Projecteur de véhicule (500, 501) selon la revendication 3, **caractérisé en ce que** la distance entre la droite de l'illuminant (110) et la droite du point focal du collimateur (130) dans la direction de l'axe de projection (7) définit une deuxième distance (236) qui correspond à un tiers de la distance focale du collimateur (230, 231, 232, 233) de l'un des au moins deux collimateurs (20, 21, 22, 23).

5. Projecteur de véhicule (500, 501) selon l'une des revendications précédentes, **caractérisé en ce que** les au moins deux moyens d'éclairage (10, 11, 12, 13) présentent chacun une largeur d'éclairage (212) perpendiculaire à l'axe de projection (7) et présentent chacun entre eux une distance d'éclairage (216) perpendiculaire à l'axe de projection (7) qui est de préférence comprise entre une et trois fois la valeur de la largeur d'éclairage (212), mais qui correspond de manière particulièrement préférée au double de la valeur de la largeur d'éclairage (212).

6. Projecteur de véhicule (500, 501), comprenant au moins deux moyens d'éclairage (10, 11, 12, 13) ayant chacun une surface d'émission de lumière (15, 16, 17, 18), au moins deux collimateurs (20, 21, 22, 23) ayant chacun un axe de collimateur optique (60, 61, 62, 63) et un foyer de collimateur (30, 31, 32, 33), et une optique de projection (1) avec un axe de projection optique (7) et un foyer (3) situé sur l'axe de projection (7), dans lequel les au moins deux collimateurs (20, 21, 22, 23) sont situés entre une surface d'image de collimateur (45), qui s'étend normalement à l'axe de projection (7), et l'optique de projection (1), et les points focaux de collimateur (30, 31, 32, 33) sont respectivement situés entre la surface d'image de collimateur (45) et les au moins deux collimateurs (20, 21, 22, 23), et les au moins deux moyens d'éclairage (10, 11, 12, 13) sont situés entre les au moins deux collimateurs (20, 21, 22, 23) et les points focaux de collimateur (30, 31, 32, 33), et chacun des au moins deux moyens d'éclairage (10, 11, 12, 13) est agencé pour être situé entre la surface d'image de collimateur (45) et les au moins deux collimateurs (20, 21, 22, 23), 11, 12, 13) est configuré pour émettre de la lumière depuis les surfaces d'émission de lumière respectives (15, 16, 17, 18) à travers l'un des au moins deux collimateurs (20, 21, 22, 23) et ensuite la lumière émise est guidée conjointement à travers l'optique de projection (1), **caractérisé en ce que** le phare de véhicule (500, 501) comprend une optique collectrice (2), qui est disposée entre l'optique de projection (1) et les collimateurs (20, 21, 22, 23), avec un axe optique (8) et un foyer (5) de l'optique collectrice, l'axe de projection (7) et l'axe optique (8) de l'optique collectrice (2) étant parallèles, de préférence coaxiaux, et en outre, une zone d'image de l'optique collectrice (6) est définie sous la forme d'un plan qui s'étend perpendiculairement à l'axe optique (8) et à travers le foyer (5) de l'optique collectrice (2), et la zone d'image du collimateur (45) est située entre la zone d'image de l'optique collectrice (6) et les zones d'émission de lumière (15, 16, 17, 18) des au moins deux moyens d'éclairage (10, 11, 12, 13) et le point focal (3) de l'optique de projection (1) est situé dans la zone d'image de l'optique de collecte (6), et une ligne droite de point focal de projection (103) passant par et coupant le point focal (3) de l'optique de projection (1) et normale à l'axe de projection (7) est définie, et une ligne droite de zone d'image de collimateur (145) est définie, qui s'étend dans et coupe la surface d'image du collimateur (45) et normale à l'axe de projection (7) est définie, la distance entre la ligne droite du point focal de projection (103) et la surface d'image du collimateur (45) dans la direction de l'axe de projection (7) définit une cinquième distance (239) qui correspond de préférence à la moitié de la valeur de la distance focale du point focal de l'optique de collecte (5).

7. Projecteur de véhicule (500, 501, 502) comprenant au moins deux moyens d'éclairage (10, 11, 12, 13) ayant chacun une surface d'émission de lumière (15, 16, 17, 18), au moins deux collimateurs (20, 21, 22, 23) ayant chacun un axe optique de collimateur (60, 61, 62, 63) et ayant chacun un foyer de collimateur (30, 31, 32) situé sur l'axe optique de collimateur (60, 61, 62, 63).

point focal (30, 31, 32, 33), et un système optique de projection (1) avec un axe de projection optique (7) et un point focal (3) situé sur l'axe de projection (7),

**caractérisé en ce que**

l'optique de projection (1) comprend en outre une surface de Petzval (503), et

les au moins deux collimateurs (20, 21, 22, 23) sont situés entre la surface de Petzval (503) de l'optique de projection (1) et l'optique de projection (1), et

les points focaux de collimateur (30, 31, 32, 33) sont chacun situés entre la surface de Petzval (503) et les au moins deux collimateurs (20, 21, 22, 23), et

les au moins deux moyens d'éclairage (10, 11, 12, 13) sont situés entre les au moins deux collimateurs (20, 21, 22, 23) et les foyers de collimateur (30, 31, 32, 33)

et chacun des au moins deux moyens d'éclairage (10, 11, 12, 13) est agencé pour émettre de la lumière à partir des surfaces émettrices de lumière respectives (15, 16, 17, 18) à travers l'un des au moins deux collimateurs (20, 21, 22), 23) et la lumière émise est ensuite guidée conjointement à travers l'optique de projection (1), une optique collectrice (2) avec un axe optique (8) et un foyer d'optique collectrice (5) étant en outre comprise, l'axe de projection (7) et l'axe optique (8) de l'optique collectrice (2) étant parallèles, de préférence coaxiaux, de préférence coaxiale, et en outre une surface d'image de l'optique de collecte (6) est définie qui passe par le point focal (5) de l'optique de collecte (2), et la surface d'image du collimateur (545) est définie entre la surface de Petzval (503) de l'optique de projection (1) et les surfaces émettrices de lumière (15, 16, 17, 18) des au moins deux moyens d'éclairage (10, 11, 12, 13), et le point focal (3) de l'optique de projection (1) est situé dans la zone d'image (6) de l'optique de collecte.

8. Projecteur de véhicule (502) selon la revendication 7, **caractérisé en ce que** les axes de collimateur (60, 61, 62, 63) sont chacun normaux à la surface Petzval (503).

9. Projecteur de véhicule (502) selon la revendication 7 ou 8, **caractérisé en ce que** les au moins deux illuminants sont disposés pour émettre de la lumière à travers les au moins deux collimateurs et pour générer des images collimateur-luminant virtuelles, qui forment des objets de l'optique de projection (1) et apparaissent comme des images d'éclairage d'optique de projection virtuelles (540, 541, 542, 543) sur la surface Petzval (503), qui sont imagées par l'intermédiaire de l'optique de projection (1), les images d'éclairage d'optique de projection virtuelles (540, 541, 542, 543) étant directement adjacentes les unes aux autres sur la surface Petzval (503).

10. Projecteur de véhicule (502) selon la revendication 7 ou 8, **caractérisé en ce que** les au moins deux illuminants sont disposés pour émettre de la lumière à travers les au moins deux collimateurs et pour générer des images lumineuses virtuelles de collimateur qui forment des objets de l'optique de projection (1) et apparaissent comme des images lumineuses virtuelles d'optique de projection (540, 541, 542, 543) sur la surface de Petzval (503), qui sont imagées via l'optique de projection (1), les images d'éclairement de l'optique de projection virtuelle (540, 541, 542, 543) se chevauchant sur la surface de Petzval (503), les images d'éclairement de l'optique de projection virtuelle (540, 541, 542, 543) ayant chacune une largeur d'éclairement (516), et au moins un chevauchement étant la moitié d'une largeur d'éclairement (516).

11. Projecteur de véhicule (500, 501, 502) selon l'une des revendications précédentes, **caractérisé en ce que** les surfaces d'émission de lumière (15, 16, 17, 18) des au moins deux moyens lumineux (10, 11, 12, 13) sont disposées chacune perpendiculairement à la direction des axes de collimateur (60, 61, 62, 63), la lumière émise par les au moins deux moyens d'éclairage (10, 11, 12, 13) étant de préférence émise dans la direction de l'axe de collimateur (60, 61, 62, 63) d'un collimateur respectivement associé à travers ce dernier.

12. Projecteur de véhicule (500, 501, 502) selon l'une des revendications précédentes, **caractérisé en ce que** les au moins deux moyens d'émission de lumière (10, 11, 12, 13) comprennent chacun au moins un moyen d'émission de lumière à semi-conducteur, en particulier une matrice de plusieurs moyens d'émission de lumière à semi-conducteur, qui est formée de préférence sous la forme d'un composant électronique, et présentent de préférence chacun une surface d'émission de lumière (15, 16, 17, 18) de forme carrée, et de préférence les au moins deux moyens d'émission de lumière (10, 11, 12, 13) sont chacun de construction identique.

13. Projecteur de véhicule (500, 501, 502) selon l'une des revendications précédentes, **caractérisé en ce que** les au moins deux collimateurs (20, 21, 22, 23), qui comprennent de préférence chacun au moins une lentille optique convergente, sont chacun de construction identique.

Fig. 1

Fig. 2

*Fig. 3*

EP 3 467 374 B1

Fig. 4

Fig. 5

Fig. 6

*Fig. 7*

*Fig. 8*

EP 3 467 374 B1

**EP 3 467 374 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2910847 A2

- EP 2767752 A1